(19) Europäisches Patentamt
European Patent Office
Office européen des brevets

(11) **EP 4 431 872 B1**

(12) **EUROPEAN PATENT SPECIFICATION**

(45) Date of publication and mention
of the grant of the patent:
**08.04.2026 Bulletin 2026/15**

(21) Application number: **24163843.6**

(22) Date of filing: **15.03.2024**

(51) International Patent Classification (IPC):
*G01C 19/5776* (2012.01)    *G01C 25/00* (2006.01)

(52) Cooperative Patent Classification (CPC):
**G01C 19/5776; G01C 25/005**

(54) **METHOD FOR DIAGNOSING FAILURE IN SENSOR MODULE AND SENSOR MODULE**

VERFAHREN ZUR FEHLERDIAGNOSE IN SENSORMODUL UND SENSORMODUL

PROCÉDÉ DE DIAGNOSTIC DE DÉFAILLANCE DANS UN MODULE DE CAPTEUR ET MODULE DE CAPTEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.03.2023 JP 2023040755**

(43) Date of publication of application:
**18.09.2024 Bulletin 2024/38**

(73) Proprietor: **Seiko Epson Corporation
Tokyo 160-8801 (JP)**

(72) Inventor: **ITO, Fumiya
Suwa-shi, 392-8502 (JP)**

(74) Representative: **Lewis Silkin LLP
Arbor
255 Blackfriars Road
London SE1 9AX (GB)**

(56) References cited:
**JP-A- 2008 247 053      US-A1- 2013 096 867
US-A1- 2020 371 131      US-A1- 2022 204 002**

- **MONTEIRO MART�N ET AL: "Angular velocity and centripetal acceleration relationship", vol. 52, no. 5, 1 May 2014 (2014-05-01), US, pages 312 - 313, XP093184310, ISSN: 0031-921X, Retrieved from the Internet <URL:https://pubs.aip.org/aapt/pte/article-pdf/52/5/312/11110584/312_1_online.pdf> [retrieved on 20240710], DOI: 10.1119/1.4872422**

**Description**

The present application is based on, and claims priority from JP Application Serial Number 2023-040755, filed March 15, 2023.

BACKGROUND

1. Technical Field

The present disclosure relates to a method for diagnosing a failure in a sensor module and the sensor module.

2. Related Art

JP-A-2008-247053 describes a vehicle control device including a first vehicle motion control unit that controls a motion state of a vehicle based on an inertial force detected by a first inertial force sensor, a second vehicle motion control unit that controls a motion state of a vehicle and is different from the first vehicle motion control unit, and a central unit that is connected to a second inertial force sensor detecting the same inertial force as the first inertial force sensor and is connected to the first and second vehicle motion control units for bidirectional communication, in which at least one of the first vehicle motion control unit and the central unit includes a failure diagnosis unit that compares the inertial forces detected by the first and second inertial force sensors with each other and diagnoses a failure based on a comparison result. According to the control device described in JP-A-2008-247053, reliability against a failure in a power supply or an MPU can be improved by making the inertial force sensor redundant.

US 2022/204002 A1 and US 2020/371131 A1 disclose devices for determining the presence of an abnormality of an inertial sensor wherein the difference between two different sensor signals are compared.

JP-A-2008-247053 is an example of the related art.

However, in the control device described in JP-A-2008-247053, it can be determined that either the first inertial force sensor or the second inertial force sensor fails, but it is difficult to determine which inertial force sensor fails.

SUMMARY

A method for diagnosing a failure in a sensor module according to the present disclosure is a method for diagnosing a failure in a sensor module including a first sensor element configured to detect an angular velocity around a first axis and output a first detection signal, a second sensor element configured to detect an angular velocity around the first axis and output a second detection signal, and a third sensor element configured to detect an acceleration in a second-axis direction intersecting the first axis and output a third detection signal, and the method includes:

> a first diagnosis step of comparing a first angular velocity with a second angular velocity and diagnosing that the first sensor element and the second sensor element are normal when a comparison result satisfies a first standard, the first angular velocity being the angular velocity around the first axis included in a first angular velocity signal based on the first detection signal, the second angular velocity being the angular velocity around the first axis included in a second angular velocity signal based on the second detection signal; and
> a second diagnosis step of performing failure diagnosis of the first sensor element using the first angular velocity signal or the second angular velocity signal and an acceleration signal based on the third detection signal when the comparison result does not satisfy the first standard.

A sensor module according to an aspect of the present disclosure includes:

> a first sensor element configured to detect an angular velocity around a first axis and output a first detection signal;
> a second sensor element configured to detect an angular velocity around the first axis and output a second detection signal;
> a third sensor element configured to detect an acceleration in a second-axis direction intersecting the first axis and output a third detection signal; and
> a failure diagnosis circuit, in which
> the failure diagnosis circuit

>> compares a first angular velocity with a second angular velocity and diagnoses that the first sensor element and the second sensor element are normal when a comparison result satisfies a first standard, the first angular velocity being the angular velocity around the first axis included in a first angular velocity signal based on the first detection signal, the second angular velocity being the angular velocity around the first axis included in a second angular velocity signal based on the second detection signal, and

performs failure diagnosis of the first sensor element using the first angular velocity signal or the second angular velocity signal and an acceleration signal based on the third detection signal when the comparison result does not satisfy the first standard.

BRIEF DESCRIPTION OF THE DRAWINGS

FIG. 1 is a diagram showing a configuration example of a system for implementing a failure diagnosis method according to the embodiment.
FIG. 2 is a flowchart showing an example of a procedure of the failure diagnosis method according to the embodiment.
FIG. 3 is a flowchart showing an example of a procedure of a second diagnosis step in a first embodiment.
FIG. 4 is a diagram showing a configuration of a specific example of a sensor module and a failure diagnosis device.
FIG. 5 is a view showing an X axis, a Y axis, and a Z axis of the sensor module.
FIG. 6 is a diagram showing a relationship between an angular velocity $\Omega_Z$ and an angular velocity $G_Z$ obtained by actual measurement.
FIG. 7 is a diagram showing a relationship among a rotational angular velocity vector $\omega$, a position vector r, and a centripetal acceleration vector $a_{cen}$.
FIG. 8 is a diagram showing a relationship among the rotational angular velocity vector $\omega$, the position vector r, and an Euler acceleration vector $a_{eul}$.
FIG. 9 is a diagram showing a relationship among the rotational angular velocity vector $\omega$, the position vector r, and a Coriolis acceleration vector $a_{col}$.
FIG. 10 is a diagram showing time-series data of the angular velocity $\Omega_Z$ obtained by the actual measurement.
FIG. 11 is a diagram showing time-series data of an acceleration $A_Y$ obtained by actual measurement.
FIG. 12 is a diagram showing a relationship between the angular velocity $\Omega_Z$ and the acceleration $A_Y$ obtained from the actual measurement.
FIG. 13 is a diagram showing a relationship between the angular velocity $\Omega_Z$ and the angular velocity $G_Z$ obtained by simulation.
FIG.14 is a diagram showing a relationship between the acceleration $A_Y$ and the angular velocity $\Omega_Z$ obtained by simulation.
FIG. 15 is a flowchart showing an example of a procedure of the second diagnosis step in a second embodiment.
FIG. 16 is a diagram showing a relationship between the acceleration $A_Y$ and a centripetal acceleration $V_X\Omega_Z$ obtained by simulation.
FIG. 17 is a flowchart showing an example of a procedure of the second diagnosis step in a third embodiment.
FIG. 18 is a diagram showing a relationship between the acceleration $A_Y$ and a centripetal acceleration $-r_YQ_Z^2$ obtained by simulation.
FIG. 19 is a flowchart showing an example of a procedure of the second diagnosis step in a fourth embodiment.
FIG. 20 is a flowchart showing an example of a procedure of the second diagnosis step in a fifth embodiment.
FIG. 21 is a diagram showing a functional configuration example of a sensor module according to the embodiment.
FIG. 22 is a diagram showing a specific configuration example of the sensor module according to the embodiment.

DESCRIPTION OF EMBODIMENTS

Hereinafter, preferred embodiments of the present disclosure will be described in detail with reference to the drawings. The embodiments to be described below do not unduly limit contents of the present disclosure described in the claims. In addition, not all configurations to be described below are necessarily essential components of the present disclosure.

1. Method For Diagnosing Failure in Sensor Module

1-1. First Embodiment

1-1-1. Description of Failure Diagnosis Method

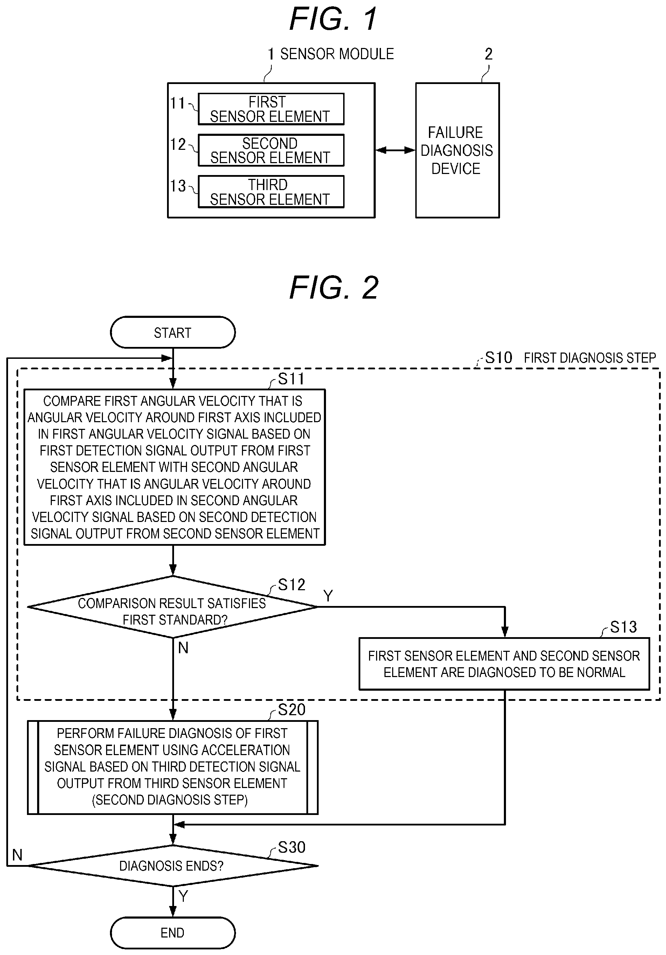

FIG. 1 is a diagram showing a configuration example of a system for implementing a failure diagnosis method according to the embodiment. As shown in FIG. 1, a sensor module 1 to be subjected to the failure diagnosis method according to the embodiment includes a first sensor element 11, a second sensor element 12, and a third sensor element 13.

The first sensor element 11 detects an angular velocity around a first axis and outputs a first detection signal. The second sensor element 12 detects an angular velocity around the first axis and outputs a second detection signal. That is, both the first sensor element 11 and the second sensor element 12 detect the angular velocity around the first axis, but the first sensor element 11 may have detection accuracy higher than that of the second sensor element 12. The "high detection accuracy" means, for example, that the noise included in the detection signal is small and the bias stability is high.

The third sensor element 13 detects an acceleration in a second-axis direction intersecting the first axis and outputs a third detection signal. The first axis and the second axis may be perpendicular to each other. Note that the meaning of "the first axis and the second axis are perpendicular to each other" includes not only a case in which an angle formed by the first axis and the second axis is strictly 90° but also a case in which the angle formed by the first axis and the second axis has an error with respect to 90° due to a manufacturing error of the sensor module 1.

For example, the first axis may be an axis in a direction perpendicular to a surface of a circuit board on which the first sensor element 11 and the second sensor element 12 are mounted, and the second axis may be an axis parallel to the surface of the circuit board. For example, the sensor module 1 is placed such that the first axis is in the direction perpendicular to a placement surface and the second axis is parallel to the placement surface.

A failure diagnosis device 2 is connected to the sensor module 1 and performs failure diagnosis of the sensor module 1 by the failure diagnosis method according to the embodiment. In the failure diagnosis method according to the embodiment, it is premised that two or more of the first sensor element 11, the second sensor element 12, and the third sensor element 13 are unlikely to simultaneously fail.

FIG. 2 is a flowchart showing an example of a procedure of the failure diagnosis method according to the embodiment. For example, the failure diagnosis device 2 may perform the processing of the steps according to the procedure shown in FIG. 2 by executing a program (not shown). As shown in FIG. 2, the failure diagnosis method according to the embodiment includes a first diagnosis step S10 and a second diagnosis step S20. In FIG. 2, the first diagnosis step S10 includes step S11, step S12, and step S13.

First, in step S11, the failure diagnosis device 2 compares a first angular velocity with a second angular velocity. The first angular velocity is an angular velocity around the first axis included in a first angular velocity signal based on the first detection signal output from the first sensor element 11. The second angular velocity is an angular velocity around the first axis included in a second angular velocity signal based on the second detection signal output from the second sensor element 12. The first angular velocity signal may be the first detection signal or a signal obtained by performing predetermined signal processing on the first detection signal. Similarly, the second angular velocity signal may be the second detection signal or a signal obtained by performing predetermined signal processing on the second detection signal.

Examples of the predetermined signal processing may include A/D conversion processing, correction processing, and filter processing. The sensor module 1 may perform the predetermined signal processing on the first detection signal and the second detection signal to generate the first angular velocity signal and the second angular velocity signal, and the failure diagnosis device 2 may acquire the first angular velocity signal and the second angular velocity signal from the sensor module 1. Alternatively, the failure diagnosis device 2 may acquire the first detection signal and the second detection signal from the sensor module 1 and perform the predetermined signal processing on the first detection signal and the second detection signal to generate the first angular velocity signal and the second angular velocity signal. Alternatively, the sensor module 1 may perform a part of the predetermined signal processing on the first detection signal and the second detection signal to generate a first intermediate signal and a second intermediate signal, and the failure diagnosis device 2 may acquire the first intermediate signal and the second intermediate signal from the sensor module 1 and perform the other part of the predetermined signal processing on the first intermediate signal and the second intermediate signal to generate the first angular velocity signal and the second angular velocity signal.

For example, the failure diagnosis device 2 may compare the first angular velocity and the second angular velocity by calculating a difference between the first angular velocity and the second angular velocity or a ratio of the first angular velocity to the second angular velocity.

Next, in step S12, the failure diagnosis device 2 determines whether a comparison result in step S11 satisfies a first standard. When the comparison result satisfies the first standard, the first sensor element 11 and the second sensor element 12 are diagnosed to be normal in step S13. For example, when the failure diagnosis device 2 calculates the difference between the first angular velocity and the second angular velocity in step S11, the first standard may be a predetermined range including 0. For example, when the failure diagnosis device 2 calculates the ratio of the first angular velocity to the second angular velocity in step S11, the first standard may be a predetermined range including 1.

When the comparison result in step S11 does not satisfy the first standard in step S12, the failure diagnosis device 2 performs the failure diagnosis of the first sensor element 11 using the first angular velocity signal or the second angular velocity signal and an acceleration signal based on the third detection signal output from the third sensor element 13 in the second diagnosis step S20. The acceleration signal may be the third detection signal or a signal obtained by performing predetermined signal processing on the third detection signal. Examples of the predetermined signal processing may include A/D conversion processing, correction processing, and filter processing. The sensor module 1 may perform the predetermined signal processing on the third detection signal to generate an acceleration signal, and the failure diagnosis device 2 may acquire the acceleration signal from the sensor module 1. Alternatively, the failure diagnosis device 2 may acquire the third detection signal from the sensor module 1 and perform the predetermined signal processing on the third detection signal to generate the acceleration signal. Alternatively, the sensor module 1 may perform a part of the predetermined signal processing on the third detection signal to generate a third intermediate signal, and the failure diagnosis device 2 may acquire the third intermediate signal from the sensor module 1 and perform the other part of the predetermined signal processing on the third intermediate signal to generate the acceleration signal.

Then, the failure diagnosis device 2 repeatedly performs the processing in steps S11, S12, S13, and S20 until the failure diagnosis is ended in step S30.

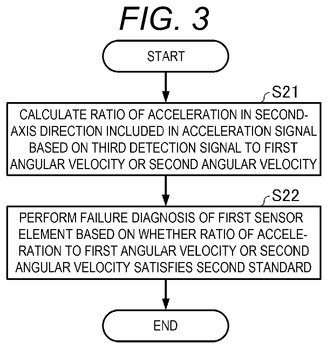

FIG. 3 is a flowchart showing an example of a procedure of the second diagnosis step S20 shown in FIG. 2 in the first embodiment.

As shown in FIG. 3, in step S21, the failure diagnosis device 2 calculates a ratio of the acceleration in the second-axis direction, which is included in the acceleration signal based on the third detection signal, to the first angular velocity or the second angular velocity.

Then, in step S22, the failure diagnosis device 2 performs the failure diagnosis of the first sensor element 11 based on whether a ratio of the acceleration to the first angular velocity or the second angular velocity calculated in step S21 satisfies a second standard. In order to reduce the influence of noise, the failure diagnosis device 2 may calculate an average value of the ratios in a predetermined period as the ratio of the acceleration to the first angular velocity or the second angular velocity. For example, the failure diagnosis device 2 may diagnose that the first sensor element 11 is normal when the ratio of the acceleration to the first angular velocity satisfies the second standard, and may diagnose that the first sensor element 11 fails when the ratio of the acceleration to the first angular velocity does not satisfy the second standard. Alternatively, the failure diagnosis device 2 may diagnose that the first sensor element 11 fails when the ratio of the acceleration to the second angular velocity satisfies the second standard, and may diagnose that the first sensor element 11 is normal when the ratio of the acceleration to the second angular velocity does not satisfy the second standard.

For example, the second standard may be a predetermined range including a predetermined reference value. For example, the failure diagnosis device 2 or another device may previously calculate a value of a ratio of the acceleration to the first angular velocity, which is assumed when both the first sensor element 11 and the third sensor element 13 are normal, as a reference value by actual measurement or simulation. Alternatively, the failure diagnosis device 2 or another device may previously calculate a value of a ratio of the acceleration to the second angular velocity, which is assumed when both the second sensor element 12 and the third sensor element 13 are normal, as a reference value by actual measurement or simulation.

Two or more of the first sensor element 11, the second sensor element 12, and the third sensor element 13 are unlikely to simultaneously fail, and therefore, in step S22, the failure diagnosis device 2 diagnoses that the second sensor element 12 is normal when the first sensor element 11 fails, and diagnoses that the second sensor element 12 fails when the first sensor element 11 is normal.

Hereinafter, a failure diagnosis method according to the first embodiment will be described in detail with reference to specific examples of the sensor module 1 and the failure diagnosis device 2.

1-1-2. Specific Examples of Sensor Module and Failure Diagnosis Device

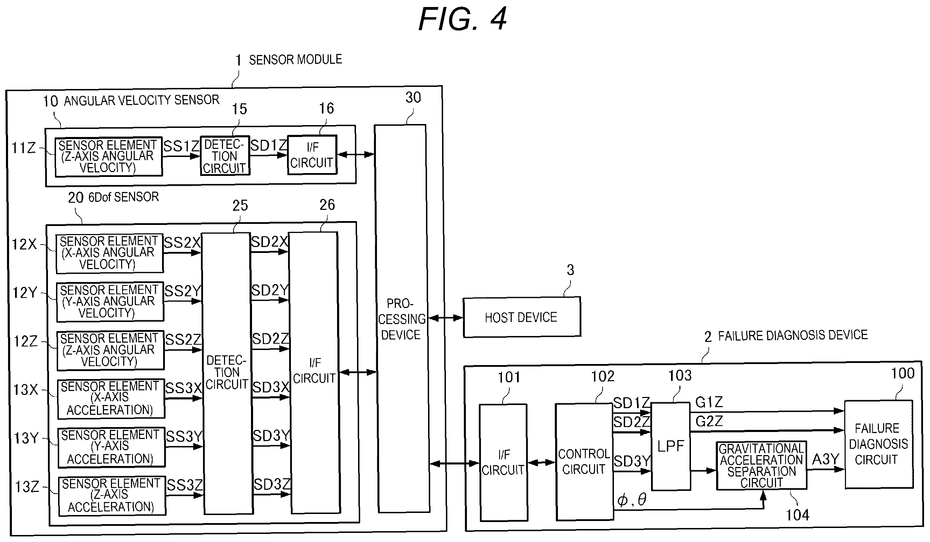

FIG. 4 is a diagram showing a configuration of a specific example of the sensor module 1 and the failure diagnosis device 2. In the example shown in FIG. 4, the sensor module 1 includes an angular velocity sensor 10, a 6Dof sensor 20, and a processing device 30. Dof is an abbreviation for Degrees Of Freedom. The sensor module 1 may have a configuration obtained by omitting or changing a part of the components in FIG. 4, or adding other components to the components in FIG. 4. The angular velocity sensor 10, the 6Dof sensor 20, and the processing device 30 are accommodated in a housing (not shown).

In the sensor module 1, a three-axis coordinate system is defined by an X axis, a Y axis, and a Z axis. The angular velocity sensor 10 detects an angular velocity around the Z axis. The 6Dof sensor 20 detects angular velocities around three axes, the X axis, the Y axis, and the Z axis perpendicular to one another, and accelerations in three-axes directions of the X axis, the Y axis, and the Z axis. That is, a direction of a detection axis of the angular velocity sensor 10 is a direction of the Z axis of the sensor module 1, and the directions of three detection axes of the 6Dof sensor 20 are directions of the X axis, the Y axis, and the Z axis of the sensor module 1. For example, the angular velocity sensor 10 and the 6Dof sensor 20 are mounted on the same circuit board, an axis perpendicular to a surface of the circuit board is the Z axis, and the two axes parallel to the surface of the circuit board are the X axis and the Y axis.

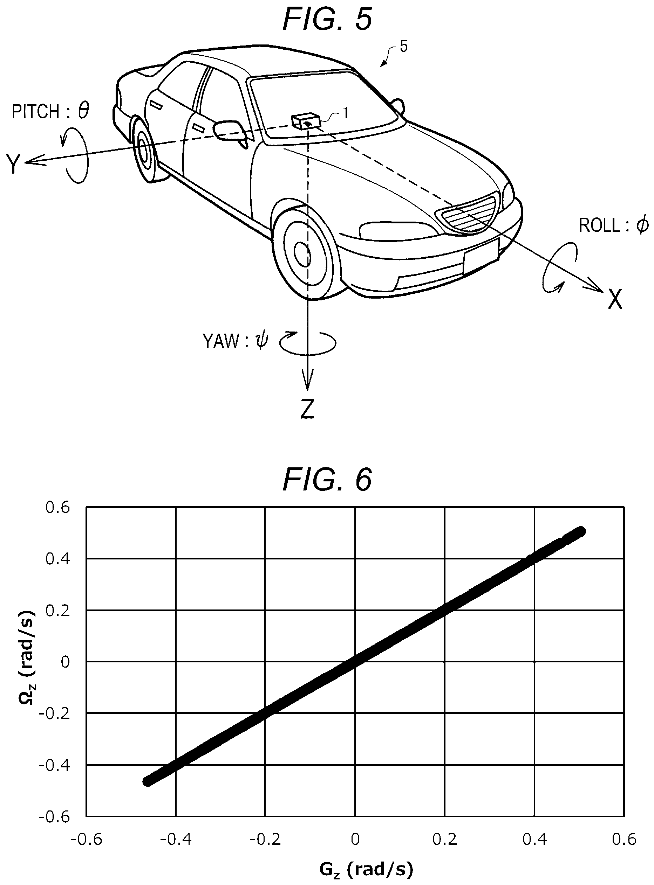

In the following description, it is assumed that the sensor module 1 is mounted on an automatic vehicle. As shown in FIG. 5, the sensor module 1 is placed in an automatic vehicle 5 such that the X axis is along a traveling direction of the automatic vehicle 5, the Y axis is along a right direction perpendicular to the traveling direction of the automatic vehicle 5, and the Z axis is along a downward direction perpendicular to a plane on which the automatic vehicle 5 travels.

As shown in FIG. 4, the angular velocity sensor 10 includes a sensor element 11Z, a detection circuit 15, and an interface circuit 16.

The sensor element 11Z is a sensor element that detects an angular velocity with the Z axis as a detection axis and outputs a detection signal SS1Z. The sensor element 11Z is made of, for example, quartz crystal, and detects the angular velocity with high accuracy from the Coriolis force applied to a vibrating object.

The detection circuit 15 acquires the detection signal SS1Z output from the sensor element 11Z at a predetermined period, performs predetermined processing such as amplification processing or filter processing to generate an analog signal of a voltage corresponding to the angular velocity around the Z axis, and converts the analog signal into a digital signal to generate detection data SD1Z.

The interface circuit 16 performs interface processing of a predetermined communication standard for the processing device 30. For example, the predetermined communication standard may be SPI or $I^2C$. SPI is an abbreviation for Serial Peripheral Interface, and $I^2C$ is an abbreviation for Inter-Integrated Circuit. For example, the interface circuit 16 acquires the detection data SD1Z output from the detection circuit 15 in response to a reading command from the processing device 30, converts the acquired detection data SD1Z into serial data, and outputs the serial data to the processing device 30.

As shown in FIG. 4, the 6Dof sensor 20 includes sensor elements 12X, 12Y, 12Z, 13X, 13Y, and 13Z, a detection circuit 25, and an interface circuit 26.

The sensor element 12X is a sensor element that detects an angular velocity with the X axis as a detection axis and outputs a detection signal SS2X. The sensor element 12Y is a sensor element that detects an angular velocity with the Y axis as a detection axis and outputs a detection signal SS2Y. The sensor element 12Z is a sensor element that detects an angular velocity with the Z axis as a detection axis and outputs a detection signal SS2Z.

The sensor element 13X is a sensor element that detects an acceleration with the X axis as a detection axis and outputs a detection signal SS3X. The sensor element 13Y is a sensor element that detects an acceleration with the Y axis as a detection axis and outputs a detection signal SS3Y. The sensor element 13Z is a sensor element that detects an acceleration with the Z-axis as a detection axis and outputs a detection signal SS3Z. The sensor elements 12X, 12Y, 12Z, 13X, 13Y, and 13Z are sensor elements made of, for example, ceramic or silicon.

The detection circuit 25 acquires the detection signal SS2X output from the sensor element 12X at a predetermined period, performs predetermined processing such as amplification processing and filter processing to generate an analog signal of a voltage corresponding to the angular velocity around the X axis, and converts the analog signal into a digital signal to generate detection data SD2X. The detection circuit 25 acquires the detection signal SS2Y output from the sensor element 12Y at a predetermined period, performs predetermined processing such as amplification processing and filter processing to generate an analog signal of a voltage corresponding to the angular velocity around the Y axis, and converts the analog signal into a digital signal to generate detection data SD2Y. The detection circuit 25 acquires the detection signal SS2Z output from the sensor element 12Z at a predetermined period, performs predetermined processing such as amplification processing and filter processing to generate an analog signal of a voltage corresponding to the angular velocity around the Z-axis, and converts the analog signal into a digital signal to generate detection data SD2Z.

Further, the detection circuit 25 acquires the detection signal SS3X output from the sensor element 13X at a predetermined period, performs predetermined processing such as amplification processing and filter processing to generate an analog signal of a voltage corresponding to the acceleration in the X-axis direction, and converts the analog signal into a digital signal to generate detection data SD3X. The detection circuit 25 acquires the detection signal SS3Y output from the sensor element 13Y at a predetermined period, performs predetermined processing such as amplification processing and filter processing to generate an analog signal of a voltage corresponding to the acceleration in the Y-axis direction, and converts the analog signal into a digital signal to generate detection data SD3Y. The detection circuit 25 acquires the detection signal SS3Z output from the sensor element 13Z at a predetermined period, performs predetermined processing such as amplification processing and filter processing to generate an analog signal of a voltage corresponding to the acceleration in the Z-axis direction, and converts the analog signal into a digital signal to generate detection data SD3Z.

The interface circuit 26 performs interface processing of a predetermined communication standard for the processing device 30. For example, the predetermined communication standard may be SPI or $I^2C$. For example, the interface circuit 26 acquires the detection data SD2X, SD2Y, SD2Z, SD3X, SD3Y, and SD3Z output from the detection circuit 15 in response to the command read from the processing device 30, converts the acquired detection data SD2X, SD2Y, SD2Z, SD3X, SD3Y, and SD3Z into serial data, and outputs the serial data to the processing device 30.

In the embodiment, the angular velocity sensor 10 is a sensor with detection accuracy higher than that of the 6Dof sensor 20. On the other hand, the 6Dof sensor 20 is a relatively inexpensive sensor although the detection accuracy thereof is lower than that of the angular velocity sensor 10. For example, the angular velocity sensor 10 may be a high-accuracy sensor having the sensor element 11Z made of quartz crystal, and the 6Dof sensor 20 may be a static capacitance type sensor obtained by processing a silicon substrate by a MEMS technology. MEMS is an abbreviation for Micro Electro Mechanical Systems.

The processing device 30 outputs a detection data reading command to the angular velocity sensor 10 at a predetermined period, and acquires the detection data SD1Z output from the angular velocity sensor 10. The processing device 30 outputs a detection data reading command to the 6Dof sensor 20 at a predetermined period, and acquires the detection data SD2X, SD2Y, SD2Z, SD3X, SD3Y, and SD3Z output from the 6Dof sensor 20. Then, the processing device 30 performs various operations on the acquired detection data.

For example, the processing device 30 may perform a temperature correction operation, a sensitivity correction operation, an offset correction operation, an alignment correction operation, a down-sampling operation, or the like on the detection data. The processing device 30 may perform an operation for calculating a posture, a speed, an angle, or the like of the sensor module 1 based on the detection data SD1Z, SD2X, SD2Y, SD3X, SD3Y, and SD3Z subjected to various operations. The posture may be expressed by a roll, a pitch, or a yaw, or may be expressed by an Euler angle or a quaternion. As shown in FIG. 5, the Euler angle is defined by three rotation angles, a roll angle $\phi$, a pitch angle $\theta$, and a yaw angle $\psi$. That is, the roll angle $\phi$ is a rotation angle with the X axis along the traveling direction of the automatic vehicle 5 as a rotation axis. The pitch angle $\theta$ is a rotation angle with the Y axis along the right direction perpendicular to the traveling direction of the automatic vehicle 5 as a rotation axis. The yaw angle $\psi$ is a rotation angle with a Z axis along the downward direction perpendicular to a plane on which the automatic vehicle 5 travels as a rotation axis.

The processing device 30 performs interface processing of a predetermined communication standard with a host device 3. For example, the predetermined communication standard may be SPI or I2C. The processing device 30 transmits the detection data SD1Z, SD2X, SD2Y, SD2Z, SD3X, SD3Y, and SD3Z subjected to various operations, and data such as a posture, a speed, and an angle to the host device 3 in response to a reading command from the host device 3. The host device 3 receives various pieces of data from the processing device 30, and performs processing such as traveling control of the automatic vehicle 5. In the traveling control of the automatic vehicle 5, the yaw angle $\psi$ is the most important among the roll angle $\phi$, the pitch angle $\theta$, and the yaw angle $\psi$. Therefore, in order to calculate the yaw angle $\psi$ with high accuracy, the sensor module 1 includes the angular velocity sensor 10 that detects the angular velocity around the Z axis with high accuracy in addition to the 6Dof sensor 20.

The processing device 30 performs interface processing of a predetermined communication standard with the failure diagnosis device 2. For example, the predetermined communication standard may be SPI or I2C. The processing device 30 transmits at least a part of the detection data SD1Z, SD2X, SD2Y, SD2Z, SD3X, SD3Y, and SD3Z or data of the roll angle $\phi$ and the pitch angle $\theta$ to the failure diagnosis device 2 in response to a reading command from the failure diagnosis device 2. The failure diagnosis device 2 performs failure diagnosis of the sensor element 11Z using various pieces of data acquired from the processing device 30.

Here, when the automatic vehicle 5 performs a rotational motion with the Z axis as a rotation axis, an angular velocity $\omega_Z$ around the Z axis is generated. The angular velocity $\omega_Z$ is detected by the sensor element 11Z of the angular velocity sensor 10 and the sensor element 12Z of the 6Dof sensor 20. Therefore, when both the sensor elements 11Z and 12Z are normal, the angular velocity $\Omega_Z$ around the Z axis detected by the sensor element 11Z and the angular velocity $G_Z$ around the Z axis detected by the sensor element 12Z substantially coincide with each other. FIG. 6 shows a relationship between the angular velocity $\Omega_Z$ and the angular velocity $G_Z$ obtained by actual measurement. As shown in FIG. 6, when both the sensor elements 11Z and 12Z are normal, a slope of an approximate straight line indicating the relationship between the angular velocity $\Omega_Z$ and the angular velocity $G_Z$ is 1. The failure diagnosis device 2 first compares the angular velocity $\Omega_Z$ with the angular velocity $G_Z$ to perform failure diagnosis of the sensor element 11Z.

On the other hand, an acceleration vector a acting on the automatic vehicle 5 is a combination of various acceleration vectors in the XYZ coordinate system as shown in Formula (1). In Formula (1), $a_g$ represents a gravitational acceleration vector, and $a_{tra}$ is an acceleration vector associated with a translational motion. The third and subsequent terms on the right side of Formula (1) are acceleration vectors associated with the rotational motion. $a_{cen}$ is a centripetal acceleration vector, $a_{eul}$ is an Euler acceleration vector, and $a_{col}$ is a Coriolis acceleration vector.

$$a = a_g + a_{tra} + a_{cen} + a_{eul} + a_{col} \cdots (1)$$

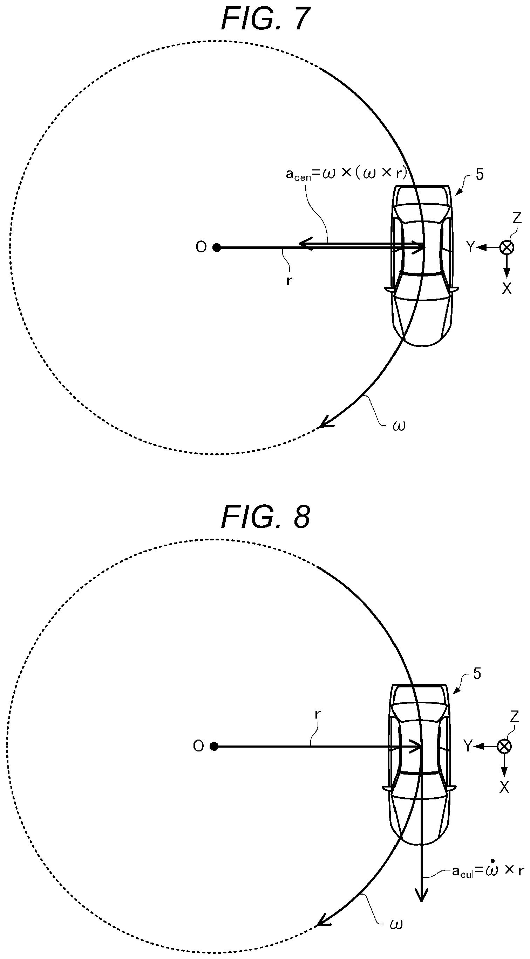

The centripetal acceleration vector $a_{cen}$, the Euler acceleration vector $a_{eul}$, and the Coriolis acceleration vector $a_{col}$, which are acceleration vectors associated with the rotational motion, correlate with the rotational angular velocity vector $\omega$. The centripetal acceleration vector $a_{cen}$ is expressed by Formula (2) using the rotational angular velocity vector $\omega$ and a translational velocity vector v or a position vector r with a rotation center as an origin O. The centripetal acceleration vector $a_{cen}$ is an acceleration that acts in a direction of the rotation center when a direction of the translational motion is changed by the rotational motion of the automatic vehicle 5, and the inertial force generated thereby is a centrifugal force. FIG. 7 shows a relationship among the rotational angular velocity vector $\omega$, the position vector r, and the centripetal acceleration vector $a_{cen}$ when the automatic vehicle 5 performs a rotational motion around the Z axis.

$$a_{cen} = \omega \times v = \omega \times (\omega \times r) \cdots (2)$$

The Euler acceleration vector $a_{eul}$ is expressed by Formula (3) using a differential of the rotational angular velocity vector $\omega$ and the position vector r. The Euler acceleration vector $a_{eul}$ is an acceleration vector that acts in a tangential direction of the rotational motion by a temporal change of the rotational angular velocity vector $\omega$, that is, an angular acceleration vector. FIG. 8 shows a relationship among the rotational angular velocity vector $\omega$, the position vector r, and the Euler acceleration vector $a_{eul}$ when the automatic vehicle 5 performs a rotational motion around the Z axis.

$$a_{eul} = \dot{\omega} \times r \cdots (3)$$

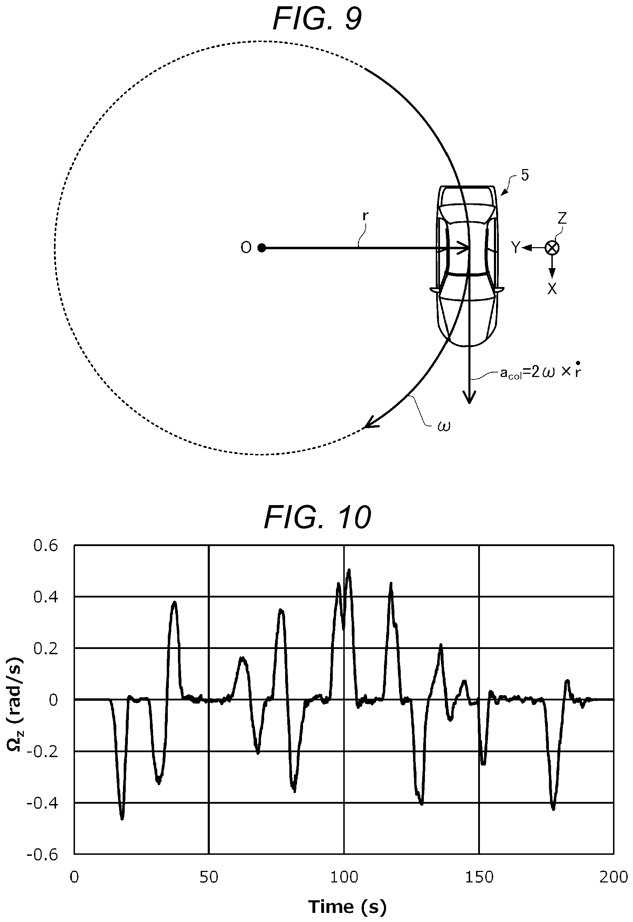

The Coriolis acceleration vector $a_{col}$ is expressed by Formula (4) using the rotational angular velocity vector $\omega$ and a differential of the position vector r. The Coriolis acceleration vector $a_{col}$ is an acceleration vector that acts in a direction perpendicular to a moving direction of the automatic vehicle 5 by a change in the position vector r with the rotation center as the origin O during the rotational motion, and the inertial force generated thereby is the Coriolis force. FIG. 9 shows a relationship among the rotational angular velocity vector $\omega$, the position vector r, and the Coriolis acceleration vector $a_{col}$ when the automatic vehicle 5 performs a rotational motion around the Z axis.

$$a_{col} = 2\omega \times \dot{r} \cdots (4)$$

From Formulas (2), (3), and (4), the centripetal acceleration vector $a_{cen}$, the Euler acceleration vector $a_{eul}$, and the Coriolis acceleration vector $a_{col}$ are all correlated with the rotational angular velocity vector $\omega$, and the failure diagnosis device 2 can perform the failure diagnosis of the sensor element 11Z using the correlation.

When the motion of the automatic vehicle 5 is only the rotational motion around the Z axis, the acceleration vector $a_{tra}$ associated with the translational motion can be ignored in Formula (1). That is, when the motion of the automatic vehicle 5 is only the rotational motion around the Z axis, the acceleration vector $a_{tra}$ associated with the translational motion, which is included in the three-axis acceleration vector A = $(A_X, A_Y, A_Z)$ detected by the 6Dof sensor 20 can be regarded as zero. On the other hand, since the gravitational acceleration vector $a_g$ cannot be ignored, it is required to separate the gravitational acceleration vector $a_g$ from the three-axis acceleration vector A.

The gravitational acceleration vector $a_g$ is expressed by Formula (5) using a gravitational acceleration g, the roll angle $\phi$, the pitch angle $\theta$, and the yaw angle $\psi$. From Formula (5), the acceleration derived from the gravitational acceleration g is also generated in the X axis and the Y axis according to a slope of the automatic vehicle 5. Therefore, the gravitational acceleration vector $a_g$ is separated by subtracting the gravitational acceleration vector $a_g$ = (-gsin$\theta$, gsin$\phi$cos$\theta$, gcos$\phi$cos$\theta$) from the three-axis acceleration vector A = $(A_X, A_Y, A_Z)$.

$$a_g = \begin{pmatrix} \cos\theta\cos\psi & \cos\theta\sin\psi & -\sin\theta \\ \sin\phi\sin\theta\cos\psi - \cos\phi\sin\psi & \sin\phi\sin\theta\sin\psi + \cos\phi\cos\psi & \sin\phi\cos\theta \\ \cos\phi\sin\theta\cos\psi + \sin\phi\sin\psi & \cos\phi\sin\theta\sin\psi - \sin\phi\cos\psi & \cos\phi\cos\theta \end{pmatrix} \begin{pmatrix} 0 \\ 0 \\ g \end{pmatrix} \cdots (5)$$
$$= \begin{pmatrix} -g\sin\theta \\ g\sin\phi\cos\theta \\ g\cos\phi\cos\theta \end{pmatrix}$$

Formula (6) is obtained by expanding the centripetal acceleration vector $a_{cen}$ shown in Formula (2) using the rotational angular velocity vector $\omega = (\omega_X, \omega_Y, \omega_Z)$ and the translational velocity vector v = $(v_X, v_Y, v_Z)$.

$$a_{cen} = \omega \times v = \begin{pmatrix} 0 & -\omega_Z & \omega_Y \\ \omega_Z & 0 & -\omega_X \\ -\omega_Y & \omega_X & 0 \end{pmatrix} \begin{pmatrix} v_X \\ v_Y \\ v_Z \end{pmatrix} = \begin{pmatrix} v_Z\omega_Y - v_Y\omega_Z \\ v_X\omega_Z - v_Z\omega_X \\ v_Y\omega_X - v_X\omega_Y \end{pmatrix} \cdots (6)$$

Formula (7) is obtained from Formula (2) by expanding the translational velocity vector v using the rotational angular velocity vector $\omega = (\omega_X, \omega_Y, \omega_Z)$ and the position vector r = $(r_X, r_Y, r_Z)$.

$$v = \omega \times r = \begin{pmatrix} 0 & -\omega_Z & \omega_Y \\ \omega_Z & 0 & -\omega_X \\ -\omega_Y & \omega_X & 0 \end{pmatrix} \begin{pmatrix} r_X \\ r_Y \\ r_Z \end{pmatrix} = \begin{pmatrix} r_Z\omega_Y - r_Y\omega_Z \\ r_X\omega_Z - r_Z\omega_X \\ r_Y\omega_X - r_X\omega_Y \end{pmatrix} \cdots (7)$$

The centripetal acceleration vector $a_{cen}$ is also expressed by Formula (8) based on formulas (6) and (7).

$$a_{cen} = \omega \times (\omega \times r) = \begin{pmatrix} -\omega_Y{}^2 - \omega_Z{}^2 & \omega_X\omega_Y & \omega_Z\omega_X \\ \omega_X\omega_Y & -\omega_Z{}^2 - \omega_X{}^2 & \omega_Y\omega_Z \\ \omega_Z\omega_X & \omega_Y\omega_Z & -\omega_X{}^2 - \omega_Z{}^2 \end{pmatrix} \begin{pmatrix} r_X \\ r_Y \\ r_Z \end{pmatrix} \cdots (8)$$

Formula (9) is obtained by expanding the Euler acceleration vector $a_{eul}$ shown in Formula (3) using the rotational angular velocity vector $\omega = (\omega_X, \omega_Y, \omega_Z)$ and the position vector $r = (r_X, r_Y, r_Z)$.

$$a_{eul} = \dot\omega \times r = \begin{pmatrix} 0 & -\dot\omega_Z & \dot\omega_Y \\ \dot\omega_Z & 0 & -\dot\omega_X \\ -\dot\omega_Y & \dot\omega_X & 0 \end{pmatrix} \begin{pmatrix} r_X \\ r_Y \\ r_Z \end{pmatrix} = \begin{pmatrix} r_Z\dot\omega_Y - r_Y\dot\omega_Z \\ r_X\dot\omega_Z - r_Z\dot\omega_X \\ r_Y\dot\omega_X - r_X\dot\omega_Y \end{pmatrix} \cdots (9)$$

Formula (10) is obtained by expanding the Coriolis acceleration vector $a_{col}$ shown in Formula (4) using the rotational angular velocity vector $\omega = (\omega_X, \omega_Y, \omega_Z)$ and the position vector $r = (r_X, r_Y, r_Z)$.

$$a_{col} = 2\omega \times \dot{r} = 2\begin{pmatrix} 0 & -\omega_Z & \omega_Y \\ \omega_Z & 0 & -\omega_X \\ -\omega_Y & \omega_X & 0 \end{pmatrix} \begin{pmatrix} \dot{r}_X \\ \dot{r}_Y \\ \dot{r}_Z \end{pmatrix} = 2\begin{pmatrix} \dot{r}_Z\omega_Y - \dot{r}_Y\omega_Z \\ \dot{r}_X\omega_Z - \dot{r}_Z\omega_X \\ \dot{r}_Y\omega_X - \dot{r}_X\omega_Y \end{pmatrix} \cdots (10)$$

Here, considering an ideal condition in which there is no motion input other than the angular velocity $\omega_Z$ around the Z axis, $\omega_X = \omega_Y = 0$, $v_Y = v_Z = 0$, and $r_X = r_Z = 0$ can be considered. Therefore, Formula (11) is obtained from Formula (6) and Formula (8).

$$a_{cen} = \begin{pmatrix} 0 \\ a_Y \\ 0 \end{pmatrix} = \begin{pmatrix} 0 \\ v_X\omega_Z \\ 0 \end{pmatrix} = \begin{pmatrix} 0 \\ -r_Y\omega_Z{}^2 \\ 0 \end{pmatrix} \cdots (11)$$

Formula (12) is obtained from Formula (9).

$$a_{eul} = \begin{pmatrix} a_X \\ 0 \\ 0 \end{pmatrix} = \begin{pmatrix} -r_y\dot\omega_Z \\ 0 \\ 0 \end{pmatrix} \cdots (12)$$

Formula (13) is obtained from Formula (10).

$$a_{col} = \begin{pmatrix} a_X \\ 0 \\ 0 \end{pmatrix} = \begin{pmatrix} -2\dot{r}_Y\omega_Z \\ 0 \\ 0 \end{pmatrix} \cdots (13)$$

The acceleration vector $a$ that acts on the automatic vehicle 5 under the ideal condition is expressed by Formula (14) based on Formulas (11), (12), and (13).

$$a = a_{cen} + a_{eul} + a_{col} = \begin{pmatrix} -r_Y \dot{\omega}_Z - 2\dot{r}_Y \omega_Z \\ -r_Y \omega_Z{}^2 \\ 0 \end{pmatrix} \cdots (14)$$

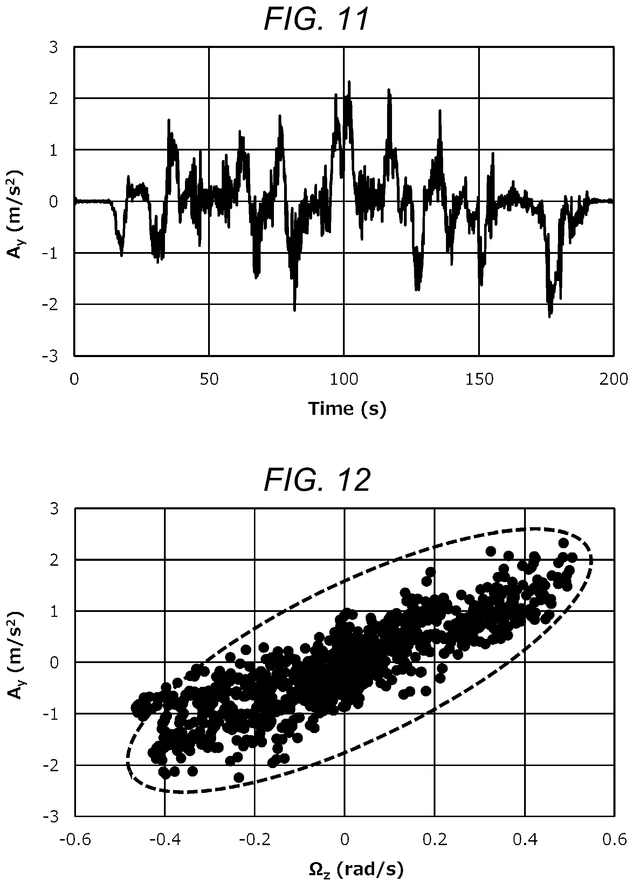

The centripetal acceleration, which is the acceleration $a_Y$ in the Y-axis direction, correlates with the angular velocity $\omega_Z$ around the Z axis based on Formulas (11) and (14). That is, when both the sensor element 11Z of the angular velocity sensor 10 and the sensor element 13Y of the 6Dof sensor 20 are normal, it is considered that there is a correlation between the angular velocity $\Omega_Z$ around the Z axis detected by the sensor element 11Z and the acceleration Ay in the Y-axis direction detected by the sensor element 13Y. FIG. 10 shows time-series data of the angular velocity $\Omega_Z$ obtained by actual measurement. FIG. 11 shows time-series data of the acceleration Ay obtained by actual measurement at the same timing as in FIG. 10. When FIG. 10 is compared with FIG. 11, a correlation is observed between the angular velocity $\Omega_Z$ and the acceleration $A_Y$. FIG. 12 shows the relationship between the angular velocity $\Omega_Z$ and the acceleration $A_Y$ obtained from the actual measurement. As shown in FIG. 12, most of the points are located within an ellipse indicated by a broken line, and it is confirmed that there is a correlation between the angular velocity $\Omega_Z$ and the acceleration Ay.

When the angular velocity $\Omega_Z$ does not coincide with the angular velocity $G_Z$, the failure diagnosis device 2 compares the angular velocity $\Omega_Z$ with the acceleration $A_Y$ to perform failure diagnosis of the sensor element 11Z.

As shown in FIG. 4, the failure diagnosis device 2 includes a failure diagnosis circuit 100, an interface circuit 101, a control circuit 102, a low-pass filter 103, and a gravitational acceleration separation circuit 104.

The interface circuit 101 is a circuit that performs interface processing with the processing device 30. For example, the interface circuit 101 performs interface processing of a predetermined communication standard with the processing device 30 as a master. For example, the predetermined communication standard may be SPI or $I^2C$.

The control circuit 102 controls communication with the processing device 30. In the embodiment, the control circuit 102 acquires the detection data SD1Z, SD2Z, SD3Y, the roll angle $\phi$, and the pitch angle $\theta$ from the processing device 30 via the interface circuit 101 in a period in which the automatic vehicle 5 performs a rotational motion for turning right or left. The control circuit 102 may acquire a signal indicating the rotation around the Z axis from a device (not shown) to specify the period in which the automatic vehicle 5 performs the rotational motion, or may acquire the detection data SD1Z and SD2Z which is data of the angular velocity around the Z axis at a predetermined period from the processing device 30 to specify, based on at least one of the detection data SD1Z and SD2Z, the period in which the automatic vehicle 5 performs the rotational motion.

The low-pass filter 103 acquires the detection data SD1Z, SD2Z, and SD3Y from the control circuit 102, and performs low-pass filter processing to reduce high-frequency noise components. The low-pass filtered detection data SD1Z is input to the failure diagnosis circuit 100 as first angular velocity data G1Z. The first angular velocity data G1Z includes the angular velocity $\Omega_Z$ based on the angular velocity around the Z axis detected by the sensor element 11Z. The low-pass filtered detection data SD2Z is input to the failure diagnosis circuit 100 as second angular velocity data G2Z. The second angular velocity data G2Z includes the angular velocity $G_Z$ based on the angular velocity around the Z axis detected by the sensor element 12Z.

The gravitational acceleration separation circuit 104 separates a gravitational acceleration component from the low-pass filtered detection data SD3Y. Specifically, the gravitational acceleration separation circuit 104 calculates $g\sin\phi\cos\theta$ which is a gravitational acceleration component in the Y-axis direction of the gravitational acceleration vector $a_g$ using the roll angle $\phi$ and the pitch angle $\theta$, and subtracts $g\sin\phi\cos\theta$ from the acceleration in the Y-axis direction included in the low-pass filtered detection data SD3Y. The detection data SD3Y from which the gravitational acceleration component is separated by the gravitational acceleration separation circuit 104 is input to the failure diagnosis circuit 100 as acceleration data A3Y. The acceleration data A3Y includes the acceleration $A_Y$ based on the acceleration in the Y-axis direction detected by the sensor element 13Y.

The failure diagnosis circuit 100 performs failure diagnosis of the sensor element 11Z using the first angular velocity data G1Z, the second angular velocity data G2Z, and the acceleration data A3Y. Specifically, the failure diagnosis circuit 100 performs the failure diagnosis of the sensor element 11Z according to the procedures shown in FIGS. 2 and 3. Here, the sensor elements 11Z, 12Z, and 13Y correspond to the first sensor element 11, the second sensor element 12, and the third sensor element 13 shown in FIG. 1, respectively, and the detection signals SS1Z, SS2Z, and SS3Y correspond to the first detection signal, the second detection signal, and the third detection signal shown in FIG. 2, respectively. The first angular velocity data G1Z, the second angular velocity data G2Z, and the acceleration data A3Y correspond to the first angular velocity signal, the second angular velocity signal, and the acceleration signal shown in FIG. 2, respectively, and the Z axis and the Y axis correspond to the first axis and the second axis shown in FIGS. 2 and 3, respectively. The angular velocity $\Omega_Z$ around the Z axis included in the first angular velocity data G1Z, the angular velocity $G_Z$ around the Z axis included in the second angular velocity data G2Z, and the acceleration $A_Y$ in the Y-axis direction included in the acceleration data A3Y correspond to the first angular velocity, the second angular velocity, and the acceleration in the second-axis direction shown in FIGS. 2 and 3, respectively.

First, in step S11 shown in FIG. 2, the failure diagnosis circuit 100 compares the angular velocity $\Omega_Z$ included in the first angular velocity data G1Z with the angular velocity $G_Z$ included in the second angular velocity data G2Z.

Next, in step S12, the failure diagnosis circuit 100 determines whether the comparison result in step S11 satisfies the first standard. When the comparison result satisfies the first standard, the sensor element 11Z and the sensor element 12Z are diagnosed to be normal in step S13.

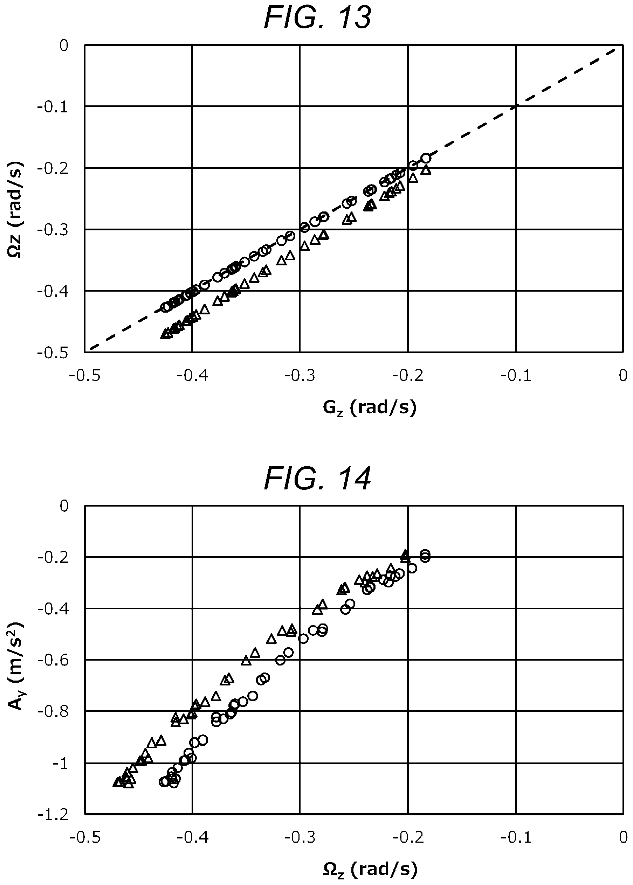

The present inventors calculated, by simulation, the angular velocity $\Omega_Z$ and the angular velocity $G_Z$ detected when the automatic vehicle 5 turns right, and derived the relationship between the angular velocity $\Omega_Z$ and the angular velocity $G_Z$ exceeding a predetermined threshold value in a case in which the sensor element 12Z is normal and the sensor element 11Z is normal and in a case in which the sensor element 12Z is normal and the sensor element 11Z fails. FIG. 13 shows the relationship between the angular velocity $\Omega_Z$ and the angular velocity $G_Z$ obtained by the simulation. In FIG. 13, the circles indicate a relationship between the angular velocity $\Omega_Z$ and the angular velocity $G_Z$ when the sensor element 11Z is normal, and the triangles indicate a relationship between the angular velocity $\Omega_Z$ and the angular velocity $G_Z$ when the sensor element 11Z fails. As shown in FIG. 13, when the sensor element 11Z is normal, the angular velocity $\Omega_Z$ and the angular velocity $G_Z$ substantially coincide with each other. Therefore, a slope of an approximate straight line indicating the relationship between the angular velocity $\Omega_Z$ and the angular velocity $G_Z$, that is, a ratio of the angular velocity $\Omega_Z$ to the angular velocity $G_Z$ is approximately 1. In contrast, when the sensor element 11Z fails, the ratio of the angular velocity $\Omega_Z$ to the angular velocity $G_Z$ is not substantially 1.

Therefore, in step S12, for example, the failure diagnosis circuit 100 may determine whether the ratio of the angular velocity $\Omega_Z$ to the angular velocity $G_Z$ satisfies the first standard with a predetermined range including 1 as the first standard.

In step S12, when the comparison result in step S11 does not satisfy the first standard, the failure diagnosis circuit 100 performs failure diagnosis of the sensor element 11Z using the first angular velocity data G1Z or the second angular velocity data G2Z and the acceleration data A3Y in the second diagnosis step S20.

Specifically, in step S21 of FIG. 3, the failure diagnosis circuit 100 calculates a ratio of the acceleration $A_Y$ included in the acceleration data A3Y to the angular velocity $\Omega_Z$ or the angular velocity $G_Z$. Then, in step S22, the failure diagnosis circuit 100 performs the failure diagnosis of the sensor element 11Z based on whether the ratio of the acceleration $A_Y$ to the angular velocity $\Omega_Z$ or the angular velocity $G_Z$ calculated in step S21 satisfies the second standard. In order to reduce the influence of noise or the like, the failure diagnosis circuit 100 may calculate an average value of the ratios of the acceleration $A_Y$ to the angular velocity $\Omega_Z$ or the angular velocity $G_Z$ in a predetermined period. For example, the failure diagnosis circuit 100 may diagnose that the sensor element 11Z is normal when the ratio of the acceleration $A_Y$ to the angular velocity $\Omega_Z$ satisfies the second standard, and may diagnose that the sensor element 11Z fails when the ratio of the acceleration $A_Y$ to the angular velocity $\Omega_Z$ does not satisfy the second standard. Alternatively, when the ratio of the acceleration $A_Y$ to the angular velocity $G_Z$ satisfies the second standard, the failure diagnosis circuit 100 may diagnose that the sensor element 11Z fails because the sensor element 12Z is normal, and when the ratio of the acceleration $A_Y$ to the angular velocity $G_Z$ does not satisfy the second standard, the failure diagnosis circuit 100 may diagnose that the sensor element 11Z is normal because the sensor element 12Z fails.

The present inventors calculated, by simulation, the acceleration $A_Y$ and the angular velocity $\Omega_Z$ detected when the automatic vehicle 5 turns right, and derived the relationship between the acceleration $A_Y$ and the angular velocity $\Omega_Z$ exceeding a predetermined threshold value in a case in which the sensor element 13Y is normal and the sensor element 11Z is normal and in a case in which the sensor element 13Y is normal and the sensor element 11Z fails. FIG. 14 shows the relationship between the acceleration $A_Y$ and the angular velocity $\Omega_Z$ obtained by the simulation. In FIG. 14, circles indicate the relationship between the acceleration Ay and the angular velocity $\Omega_Z$ when the sensor element 11Z is normal, and triangles indicate the relationship between the acceleration $A_Y$ and the angular velocity $\Omega_Z$ when the sensor element 11Z fails. As shown in FIG. 14, in the case in which the sensor element 11Z is normal and in the case in which the sensor element 11Z fails, a correlation is observed between the acceleration $A_Y$ and the angular velocity $\Omega_Z$, and slopes of approximate straight lines indicating the relationship between the acceleration $A_Y$ and the angular velocity $\Omega_Z$, that is, the ratios of acceleration $A_Y$ to angular velocity $\Omega_Z$, are different.

Therefore, in step S22, the failure diagnosis circuit 100 may diagnose the failure of the sensor element 11Z based on whether a ratio of the acceleration $A_Y$ to the angular velocity $\Omega_Z$ satisfies a second standard, using, for example, a value of the ratio of the acceleration $A_Y$ to the angular velocity $\Omega_Z$ assumed when both the sensor element 11Z and the sensor element 13Y are normal as a reference value, and using a predetermined range including the reference value as the second standard. Alternatively, the failure diagnosis circuit 100 may diagnose the failure of the sensor element 11Z based on whether a ratio of the acceleration $A_Y$ to the angular velocity $G_Z$ satisfies a second standard, using a value of the ratio of the acceleration $A_Y$ to the angular velocity $G_Z$ assumed when both the sensor element 12Z and the sensor element 13Y are normal as a reference value and using a predetermined range including the reference value as the second standard.

Two or more of the sensor element 11Z, the sensor element 12Z, and the sensor element 13Y are unlikely to simultaneously fail, and therefore, in step S22, the failure diagnosis circuit 100 diagnoses that the sensor element 12Z is normal when the sensor element 11Z fails, and diagnoses that the sensor element 12Z fails when the sensor element 11Z is normal.

Then, the failure diagnosis circuit 100 repeats the processing in steps S11, S12, S13, S21, and S22 until the failure diagnosis is ended in step S30 shown in FIG. 2.

The control circuit 102 transmits the diagnosis result obtained by the failure diagnosis circuit 100 to the processing device 30 via the interface circuit 101. The processing device 30 stores the diagnosis result in a built-in memory (not shown). When the diagnosis result indicates that the sensor element 11Z fails, the processing device 30 may not perform various operations on the detection data SD1Z, or may perform operations for calculating the posture, speed, angle, and the like of the sensor module 1 using the detection data SD2Z instead of the detection data SD1Z. The host device 3 may read the diagnosis result from the processing device 30, and when the diagnosis result indicates that the sensor element 11Z fails, the host device 3 may notify a user that the sensor element 11Z is required to be replaced.

1-1-3. Operation and Effect

As described above, in the failure diagnosis method according to the first embodiment, the failure diagnosis device 2 can diagnose whether the sensor element 11Z and the sensor element 12Z are normal or whether the sensor element 11Z or the sensor element 12Z fails in the first diagnosis step S10 on the premise that two or more of the sensor element 11Z, the sensor element 12Z, and the sensor element 13Y are unlikely to simultaneously fail. When the failure diagnosis device 2 diagnoses that the sensor element 11Z or the sensor element 12Z fails in the first diagnosis step S10, the sensor element 13Y is normal based on the above premise. Therefore, the failure diagnosis device 2 can diagnose, using the first angular velocity data G1Z or the second angular velocity data G2Z and the acceleration data A3Y in the second diagnosis step S20, whether the sensor element 11Z fails. Then, when the failure diagnosis device 2 diagnoses that the sensor element 11Z is normal in the second diagnosis step S20, the sensor element 12Z fails, and when the failure diagnosis device 2 diagnoses that the sensor element 11Z fails, the sensor element 12Z is normal.

In the failure diagnosis method according to the first embodiment, both the sensor element 11Z and the sensor element 12Z detect the angular velocity around the Z axis, and therefore, the difference between the first angular velocity data G1Z and the second angular velocity data G2Z is small, and the failure diagnosis device 2 can easily and accurately diagnose whether the sensor element 11Z and the sensor element 12Z are normal or the sensor element 11Z or the sensor element 12Z fails in the first diagnosis step S10. Then, when diagnosing that the sensor element 11Z and the sensor element 12Z are normal in the first diagnosis step S10, the failure diagnosis device 2 does not need to perform the second diagnosis step S20.

Therefore, according to the failure diagnosis method in the first embodiment, the failure diagnosis device 2 can efficiently diagnose which of the sensor element 11Z and the sensor element 12Z for detecting the angular velocity around the Z axis fails.

According to the failure diagnosis method in the first embodiment, whether the sensor element 11Z is normal or fails can be diagnosed. Therefore, for example, when the sensor element 11Z is normal, the sensor module 1 or the host device 3 can perform a required operation with high accuracy using the detection signal SS1Z output from the sensor element 11Z with high detection accuracy, and when the sensor element 11Z fails, the required operation can be continued using the detection signal SS2Z output from the sensor element 12Z.

For example, when the sensor element 11Z of the angular velocity sensor 10 fails, the host device 3 can perform fault tolerant design that contributes to the robustness of the system, such as fail-safe that stops an automatic drive control of the automatic vehicle 5 or fail-soft that estimates a position of the automatic vehicle 5 using the angular velocity around the Z axis detected by the 6Dof sensor 20 instead of the angular velocity around the Z axis detected by the angular velocity sensor 10.

In order for the host device 3 to control the traveling of the automatic vehicle 5 with high accuracy, the sensor module 1 includes the 6Dof sensor 20 that detects a three-axis angular velocity and a three-axis acceleration required for calculating the position or the posture of the automatic vehicle 5, and the angular velocity sensor 10 with high detection accuracy required for calculating a yaw angle $\psi$ particularly important for traveling control with high accuracy. That is, both the angular velocity sensor 10 and the 6Dof sensor 20 are not dedicated sensors for failure diagnosis, and according to the failure diagnosis method in the first embodiment, a sensor that is originally required can also be used for failure diagnosis. Therefore, cost reduction is easily implemented.

1-2. Second Embodiment

Hereinafter, regarding a method for diagnosing a failure in a sensor module according to the second embodiment, the same components as those of the first embodiment are denoted by the same reference signs, the description overlapping with the first embodiment is omitted or simplified, and the contents different from the first embodiment will be mainly described.

A configuration example of a system for implementing the failure diagnosis method according to the second embodiment is the same as that of FIG. 1, and therefore, illustration and description thereof will be omitted. The flowchart showing the overall procedure of the failure diagnosis method according to the second embodiment is the same as FIG. 2, and therefore, illustration and description thereof will be omitted. However, in the second embodiment, the procedure of the second diagnosis step S20 shown in FIG. 2 is different from that of the first embodiment.

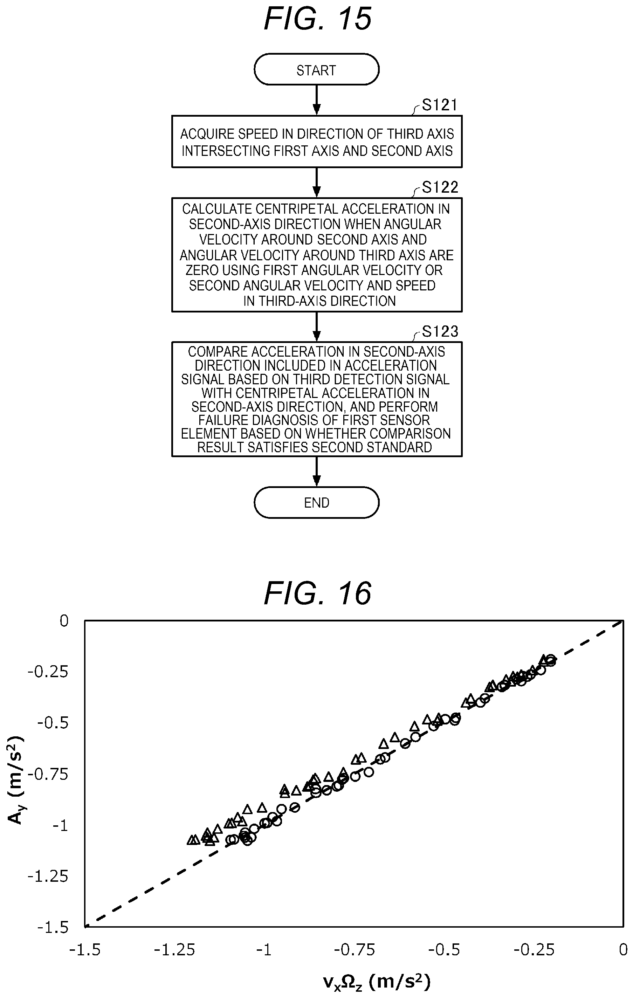

FIG. 15 is a flowchart showing an example of a procedure of the second diagnosis step S20 shown in FIG. 2 in the second embodiment.

As shown in FIG. 15, in step S121, the failure diagnosis device 2 acquires a speed in a third-axis direction intersecting the first axis and the second axis. The first axis, the second axis, and the third axis may be perpendicular to one another. Note that the meaning of "the first axis, the second axis, and the third axis are perpendicular to one another" includes not only a case in which an angle formed by the first axis and the second axis, an angle formed by the second axis and the third axis, and an angle formed by the third axis and the first axis are all strictly 90°, but also a case in which the angle formed by the first axis and the second axis, the angle formed by the second axis and the third axis, and the angle formed by the third axis and the first axis have an error with respect to 90° due to a manufacturing error of the sensor module 1. For example, the first axis may be an axis perpendicular to a placement surface of the sensor module 1, and the second axis and the third axis may be axes parallel to the placement surface of the sensor module 1.

For example, the failure diagnosis device 2 may acquire the speed in the third-axis direction from a device such as a wheel speed sensor or a GNSS Doppler. GNSS is an abbreviation for Global Navigation Satellite System. Alternatively, the sensor module 1 may include a speed sensor that detects the speed in the third-axis direction, and the failure diagnosis device 2 may acquire the speed in the third-axis direction detected by the speed sensor from the sensor module 1. For example, the sensor module 1 may include an acceleration sensor that detects an acceleration in the third-axis direction, and the failure diagnosis device 2 may acquire the acceleration in the third-axis direction detected by the acceleration sensor from the sensor module 1 and integrate the acceleration in the third-axis direction to calculate the speed in the third-axis direction.

Next, in step S122, the failure diagnosis device 2 calculates, using the first angular velocity or the second angular velocity and the speed in the third-axis direction acquired in step S121, centripetal acceleration in the second-axis direction when the angular velocity around the second axis and the angular velocity around the third axis are zero. The failure diagnosis device 2 may calculate the centripetal acceleration in the second-axis direction using the first angular velocity and the speed in the third-axis direction, or may calculate the centripetal acceleration in the second-axis direction using the second angular velocity and the speed in the third-axis direction.

Then, in step S123, the failure diagnosis device 2 compares the acceleration in the second-axis direction included in the acceleration signal based on the third detection signal output from the third sensor element 13 with the centripetal acceleration in the second-axis direction calculated in step S122, and performs the failure diagnosis of the first sensor element 11 based on whether a comparison result satisfies the second standard. For example, when the centripetal acceleration in the second-axis direction is calculated using the first angular velocity and the speed in the third-axis direction in step S122, the failure diagnosis device 2 may diagnose that the first sensor element 11 is normal when the comparison result between the acceleration in the second-axis direction and the centripetal acceleration in the second-axis direction satisfies the second standard, and may diagnose that the first sensor element 11 fails when the comparison result between the acceleration in the second-axis direction and the centripetal acceleration in the second-axis direction does not satisfy the second standard. Alternatively, when the centripetal acceleration in the second-axis direction is calculated using the second angular velocity and the speed in the third-axis direction in step S122, the failure diagnosis device 2 may diagnose that the first sensor element 11 fails when the comparison result between the acceleration in the second-axis direction and the centripetal acceleration in the second-axis direction satisfies the second standard, and may diagnose that the first sensor element 11 is normal when the comparison result between the acceleration in the second-axis direction and the centripetal acceleration in the second-axis direction does not satisfy the second standard.

For example, when the failure diagnosis device 2 calculates a difference between the acceleration in the second-axis direction and the centripetal acceleration in the second-axis direction in step S123, the second standard may be a predetermined range including 0. For example, when the failure diagnosis device 2 calculates a ratio of the acceleration in the second-axis direction to the centripetal acceleration in the second-axis direction in step S123, the second standard may be a predetermined range including 1.

Two or more of the first sensor element 11, the second sensor element 12, and the third sensor element 13 are unlikely to simultaneously fail, and therefore, in step S123, the failure diagnosis device 2 diagnoses that the second sensor element 12 is normal when the first sensor element 11 fails, and diagnoses that the second sensor element 12 fails when the first sensor element 11 is normal.

Hereinafter, as a specific example of the sensor module 1 and the failure diagnosis device 2, the failure diagnosis method according to the second embodiment will be described in detail with reference to the configuration example shown in FIG. 4 in the first embodiment. The configuration and function of the sensor module 1 are the same as those of the first embodiment, and the description thereof is omitted. In the failure diagnosis device 2, the functions of the interface circuit 101, the control circuit 102, the low-pass filter 103, and the gravitational acceleration separation circuit 104 are the same as those in the first embodiment, and the description thereof is omitted.

In the second embodiment, the failure diagnosis circuit 100 performs the failure diagnosis of the sensor element 11Z according to the procedures shown in FIGS. 2 and 15. Here, the sensor elements 11Z, 12Z, and 13Y correspond to the first sensor element 11, the second sensor element 12, and the third sensor element 13 shown in FIG. 1, respectively, and the detection signals SS1Z, SS2Z, and SS3Y correspond to the first detection signal, the second detection signal, and the third detection signal shown in FIG. 2, respectively. The first angular velocity data G1Z, the second angular velocity data G2Z, and the acceleration data A3Y correspond to the first angular velocity signal, the second angular velocity signal, and the acceleration signal shown in FIG. 2, respectively, and the Z axis, the Y axis, and the X axis correspond to the first axis, the second axis, and the third axis shown in FIGS. 2 and 15, respectively. The angular velocity $\Omega_Z$ around the Z axis included in the first angular velocity data G1Z, the angular velocity $G_Z$ around the Z axis included in the second angular velocity data G2Z, and the acceleration $A_Y$ in the Y-axis direction included in the acceleration data A3Y correspond to the first angular velocity, the second angular velocity, and the acceleration in the second-axis direction shown in FIGS. 2 and 15, respectively.

First, as in the first embodiment, the failure diagnosis circuit 100 sequentially performs step S11, step S12, and step S13 in FIG. 2.

In step S12, when the comparison result in step S11 does not satisfy the first standard, the failure diagnosis circuit 100 performs failure diagnosis of the sensor element 11Z using the acceleration data A3Y in the second diagnosis step S20.

Specifically, first, in step S121 of FIG. 15, the failure diagnosis circuit 100 acquires a speed $V_X$ in the X-axis direction. The failure diagnosis device 2 may acquire the speed $V_X$ in the X-axis direction from a device such as a wheel speed sensor or a GNSS Doppler. Alternatively, the sensor module 1 may include a speed sensor that detects the speed $V_X$ in the X-axis direction, and the failure diagnosis circuit 100 may acquire the speed $V_X$ in the X-axis direction detected by the speed sensor from the sensor module 1. For example, the control circuit 102 may acquire the detection data SD2X including an acceleration $A_X$ in the X-axis direction from the sensor module 1 via the interface circuit 101 and output the detection data SD2X to the failure diagnosis circuit 100, and the failure diagnosis circuit 100 may integrate the acceleration $A_X$ in the X-axis direction included in the detection data SD2X to calculate the speed $V_X$ in the X-axis direction.

Next, in step S122, the failure diagnosis circuit 100 calculates, using the angular velocity $\Omega_Z$ or the angular velocity $G_Z$ and the speed $V_X$ in the X-axis direction acquired in step S121, a centripetal acceleration in the Y-axis direction when the angular velocity $\omega_Y$ around the Y axis and the angular velocity $\omega_X$ around the X axis are zero. Specifically, the failure diagnosis circuit 100 calculates centripetal acceleration $V_X\Omega_Z$ in the Y-axis direction corresponding to the Y-axis component of the centripetal acceleration vector $a_{cen}$ shown in the above Formula (11) using the angular velocity $\Omega_Z$ and the speed $V_X$. Alternatively, the failure diagnosis circuit 100 calculates the centripetal acceleration $V_X G_Z$ in the Y-axis direction using the angular velocity $G_Z$ and the speed $V_X$.

Then, in step S123, the failure diagnosis circuit 100 compares the acceleration $A_Y$ in the Y-axis direction included in the acceleration data A3Y with the centripetal acceleration in the Y-axis direction calculated in step S122, and performs the failure diagnosis of the sensor element 11Z by determining whether the comparison result satisfies the second standard. For example, when the centripetal acceleration $V_X\Omega_Z$ in the Y-axis direction is calculated in step S122, the failure diagnosis circuit 100 may diagnose that the sensor element 11Z is normal when the comparison result between the acceleration $A_Y$ and the centripetal acceleration $V_X\Omega_Z$ satisfies the second standard, and may diagnose that the sensor element 11Z fails when the comparison result between the acceleration $A_Y$ and the centripetal acceleration $V_X\Omega_Z$ does not satisfy the second standard. Alternatively, when the centripetal acceleration $V_X G_Z$ in the Y-axis direction is calculated in step S122, the failure diagnosis circuit 100 may diagnose that the sensor element 11Z fails when the comparison result between the acceleration $A_Y$ and the centripetal acceleration $V_X G_Z$ satisfies the second standard, and may diagnose that the sensor element 11Z is normal when the comparison result between the acceleration $A_Y$ and the centripetal acceleration $V_X G_Z$ does not satisfy the second standard.

The present inventors calculated, by simulation, the acceleration $A_Y$ and the centripetal acceleration $V_X\Omega_Z$ detected when the automatic vehicle 5 turns right, and derived a relationship between the acceleration $A_Y$ and the centripetal acceleration $V_X\Omega_Z$ exceeding a predetermined threshold value in a case in which the sensor element 13Y is normal and the sensor element 11Z is normal and in a case in which the sensor element 13Y is normal and the sensor element 11Z fails. FIG. 16 shows the relationship between the acceleration $A_Y$ and the centripetal acceleration $V_X\Omega_Z$ obtained by the simulation. In FIG. 16, the circles indicate the relationship between the acceleration $A_Y$ and the centripetal acceleration $V_X\Omega_Z$ when the sensor element 11Z is normal, and the triangles indicate the relationship between the acceleration $A_Y$ and the centripetal acceleration $V_X\Omega_Z$ when the sensor element 11Z fails. As shown in FIG. 16, when the sensor element 11Z is normal, the acceleration $A_Y$ and the centripetal acceleration $V_X\Omega_Z$ substantially coincide with each other. Therefore, a slope of an approximate straight line indicating the relationship between the acceleration $A_Y$ and the centripetal acceleration $V_X\Omega_Z$, that is, a ratio of the acceleration $A_Y$ to the centripetal acceleration $V_X\Omega_Z$ is approximately 1. In contrast, when the sensor element 11Z fails, the ratio of the acceleration $A_Y$ to the centripetal acceleration $V_X\Omega_Z$ is not substantially 1.

Therefore, according to step S123, for example, the failure diagnosis circuit 100 may diagnose the failure of the sensor element 11Z based on whether the ratio of the acceleration $A_Y$ to the centripetal acceleration $V_X\Omega_Z$ satisfies the second standard with a predetermined range including 1 as the second standard. Alternatively, the failure diagnosis circuit 100 may diagnose the failure of the sensor element 11Z based on whether a ratio of the acceleration $A_Y$ to the centripetal acceleration $V_XG_Z$ satisfies the second standard with a predetermined range including 1 as the second standard.

Two or more of the sensor element 11Z, the sensor element 12Z, and the sensor element 13Y are unlikely to simultaneously fail, and therefore, in step S123, the failure diagnosis circuit 100 diagnoses that the sensor element 12Z is normal when the sensor element 11Z fails, and diagnoses that the sensor element 12Z fails when the sensor element 11Z is normal.

Then, the failure diagnosis circuit 100 repeats the processing in steps S11, S12, S13, S121, S122, and S123 until the failure diagnosis is ended in step S30 shown in FIG. 2.

According to the failure diagnosis method in the second embodiment described above, the same effects as those of the first embodiment can be obtained.

1-3. Third Embodiment

Hereinafter, regarding a method for diagnosing a failure in a sensor module according to the third embodiment, the same components as those in the first embodiment or the second embodiment are denoted by the same reference signs, description overlapping with that of the first embodiment or the second embodiment is omitted or simplified, and contents different from those of the first embodiment or the second embodiment will be mainly described.

A configuration example of a system for implementing the failure diagnosis method according to the third embodiment is the same as that of FIG. 1, and therefore, illustration and description thereof will be omitted. The flowchart showing the overall procedure of the failure diagnosis method according to the third embodiment is the same as FIG. 2, and therefore, illustration and description thereof will be omitted. However, in the third embodiment, the procedure of the second diagnosis step S20 shown in FIG. 2 is different from that of the first embodiment.

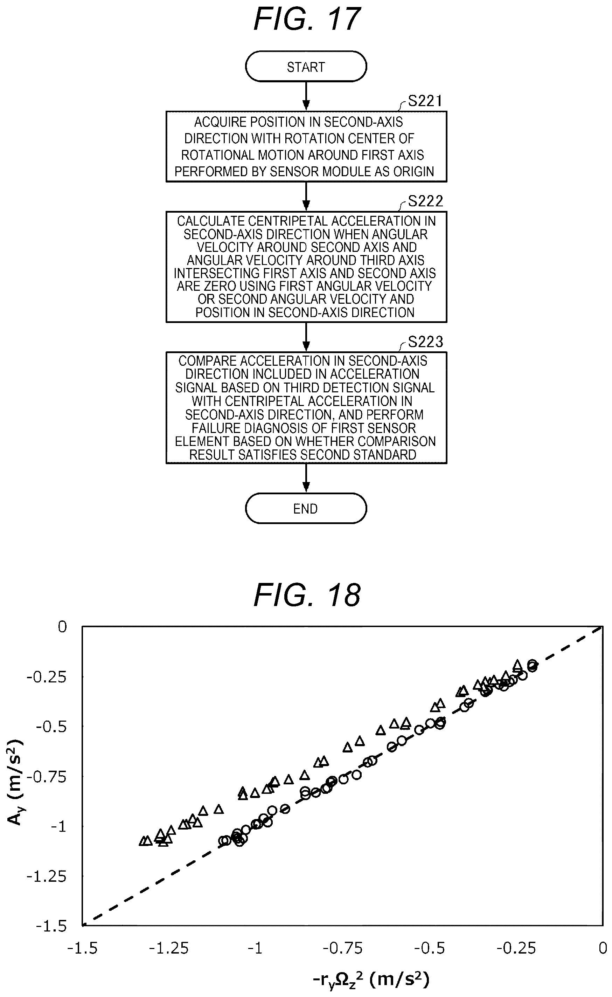

FIG. 17 is a flowchart showing an example of the procedure of the second diagnosis step S20 shown in FIG. 2 in the third embodiment.

As shown in FIG. 17, in step S221, the failure diagnosis device 2 acquires a position in the second-axis direction with a rotation center of a rotational motion around the first axis performed by the sensor module 1 as an origin. The position in the second-axis direction can also be said to be a distance from the rotation center to the sensor module 1. For example, the failure diagnosis device 2 can acquire the position in the second-axis direction by map matching or the like using position information or map data obtained from the GNSS and an external sensor such as a LiDAR or a camera. LiDAR is an abbreviation for Light Detection And Ranging. The failure diagnosis device 2 can also calculate the position in the second-axis direction using the left and right wheel speeds obtained from the wheel speed sensors.

Next, in step S222, the failure diagnosis device 2 calculates, using the first angular velocity or the second angular velocity and the position in the second-axis direction acquired in step S221, a centripetal acceleration in the second-axis direction when the angular velocity around the second axis and the angular velocity around the third axis intersecting the first axis and the second axis are zero. The first axis, the second axis, and the third axis may be perpendicular to one another. Note that the meaning of "the first axis, the second axis, and the third axis are perpendicular to one another" includes not only a case in which an angle formed by the first axis and the second axis, an angle formed by the second axis and the third axis, and an angle formed by the third axis and the first axis are all strictly 90°, but also a case in which the angle formed by the first axis and the second axis, the angle formed by the second axis and the third axis, and the angle formed by the third axis and the first axis have an error with respect to 90° due to a manufacturing error of the sensor module 1. For example, the first axis may be an axis perpendicular to a placement surface of the sensor module 1, and the second axis and the third axis may be axes parallel to the placement surface of the sensor module 1.

The failure diagnosis device 2 may calculate the centripetal acceleration in the second-axis direction using the first angular velocity and the position in the second-axis direction, or may calculate the centripetal acceleration in the second-axis direction using the second angular velocity and the position in the second-axis direction.

Then, in step S223, the failure diagnosis device 2 compares the acceleration in the second-axis direction included in the acceleration signal based on the third detection signal output from the third sensor element 13 with the centripetal acceleration in the second-axis direction calculated in step S222, and performs the failure diagnosis of the first sensor element 11 based on whether a comparison result satisfies the second standard. For example, when the centripetal acceleration in the second-axis direction is calculated using the first angular velocity and the position in the second-axis direction in step S222, the failure diagnosis device 2 may diagnose that the first sensor element 11 is normal when the comparison result between the acceleration in the second-axis direction and the centripetal acceleration in the second-axis direction satisfies the second standard, and may diagnose that the first sensor element 11 fails when the comparison result between the acceleration in the second-axis direction and the centripetal acceleration in the second-axis direction does not satisfy the second standard. Alternatively, when the centripetal acceleration in the second-axis direction is calculated using the second angular velocity and the position in the second-axis direction in step S222, the failure diagnosis device 2 may diagnose that the first sensor element 11 fails when the comparison result between the acceleration in the second-axis direction and the centripetal acceleration in the second-axis direction satisfies the second standard, and may diagnose that the first sensor element 11 is normal when the comparison result between the acceleration in the second-axis direction and the centripetal acceleration in the second-axis direction does not satisfy the second standard.

For example, when the failure diagnosis device 2 calculates a difference between the acceleration in the second-axis direction and the centripetal acceleration in the second-axis direction in step S223, the second standard may be a predetermined range including 0. For example, when the failure diagnosis device 2 calculates a ratio of the acceleration in the second-axis direction to the centripetal acceleration in the second-axis direction in step S223, the second standard may be a predetermined range including 1.

Two or more of the first sensor element 11, the second sensor element 12, and the third sensor element 13 are unlikely to simultaneously fail, and therefore, in step S223, the failure diagnosis device 2 diagnoses that the second sensor element 12 is normal when the first sensor element 11 fails, and diagnoses that the second sensor element 12 fails when the first sensor element 11 is normal.

Hereinafter, as a specific example of the sensor module 1 and the failure diagnosis device 2, the failure diagnosis method according to the third embodiment will be described in detail with reference to the configuration example shown in FIG. 4 in the first embodiment. The configuration and function of the sensor module 1 are the same as those of the first embodiment, and the description thereof is omitted. In the failure diagnosis device 2, the functions of the interface circuit 101, the control circuit 102, the low-pass filter 103, and the gravitational acceleration separation circuit 104 are the same as those in the first embodiment, and the description thereof is omitted.

In the third embodiment, the failure diagnosis circuit 100 performs failure diagnosis of the sensor element 11Z according to the procedures shown in FIGS. 2 and 17. Here, the sensor elements 11Z, 12Z, and 13Y correspond to the first sensor element 11, the second sensor element 12, and the third sensor element 13 shown in FIG. 1, respectively, and the detection signals SS1Z, SS2Z, and SS3Y correspond to the first detection signal, the second detection signal, and the third detection signal shown in FIG. 2, respectively. The first angular velocity data G1Z, the second angular velocity data G2Z, and the acceleration data A3Y correspond to the first angular velocity signal, the second angular velocity signal, and the acceleration signal shown in FIG. 2, respectively, and the Z axis, the Y axis, and the X axis correspond to the first axis, the second axis, and the third axis shown in FIGS. 2 and 17, respectively. The angular velocity $\Omega_Z$ around the Z axis included in the first angular velocity data G1Z, the angular velocity $G_Z$ around the Z axis included in the second angular velocity data G2Z, and the acceleration $A_Y$ in the Y-axis direction included in the acceleration data A3Y correspond to the first angular velocity, the second angular velocity, and the acceleration in the second-axis direction shown in FIGS. 2 and 17, respectively.

First, as in the first embodiment, the failure diagnosis circuit 100 sequentially performs step S11, step S12, and step S13 in FIG. 2.

In step S12, when the comparison result in step S11 does not satisfy the first standard, the failure diagnosis circuit 100 performs failure diagnosis of the sensor element 11Z using the acceleration data A3Y in the second diagnosis step S20.

Specifically, first, in step S221 shown in FIG. 17, the failure diagnosis circuit 100 acquires a position $r_Y$ in the Y-axis direction. The failure diagnosis circuit 100 can acquire the position $r_Y$ in the Y-axis direction by map matching or the like using position information or map data obtained from the GNSS and an external sensor such as a LiDAR or a camera. The failure diagnosis circuit 100 can also calculate the position $r_Y$ in the Y-axis direction using the left and right wheel speeds obtained from the wheel speed sensors.

Next, in step S222, the failure diagnosis circuit 100 calculates, using the angular velocity $\Omega_Z$ or the angular velocity $G_Z$ and the position $r_Y$ in the Y-axis direction acquired in step S221, a centripetal acceleration in the Y-axis direction when the angular velocity $\omega_Y$ around the Y axis and the angular velocity $\omega_X$ around the X axis are zero. Specifically, the failure diagnosis circuit 100 calculates the centripetal acceleration $-r_Y\Omega_Z^2$ in the Y-axis direction corresponding to the Y-axis component of the centripetal acceleration vector $a_{cen}$ shown in the above Formula (11) using the angular velocity $\Omega_Z$ and the position $r_Y$. Alternatively, the failure diagnosis circuit 100 calculates the centripetal acceleration $-r_Y G_Z^2$ in the Y-axis direction using the angular velocity $G_Z$ and the position $r_Y$.

Then, in step S223, the failure diagnosis circuit 100 compares the acceleration $A_Y$ in the Y-axis direction included in the acceleration data A3Y with the centripetal acceleration in the Y-axis direction calculated in step S222, and performs the failure diagnosis of the sensor element 11Z by determining whether the comparison result satisfies the second standard. For example, when the centripetal acceleration $-r_Y Q_Z^2$ in the Y-axis direction is calculated in step S222, the failure diagnosis device 2 may diagnose that the sensor element 11Z is normal when the comparison result between the acceleration $A_Y$ and the centripetal acceleration $V_X\Omega_Z$ satisfies the second standard, and may diagnose that the sensor element 11Z fails when the comparison result between the acceleration $A_Y$ and the centripetal acceleration $V_X\Omega_Z$ does not satisfy the second standard. Alternatively, when the centripetal acceleration $-r_Y G_Z^2$ in the Y-axis direction is calculated in step S222, the failure diagnosis circuit 100 may diagnose that the sensor element 11Z fails when the comparison result between the acceleration $A_Y$ and the centripetal acceleration $V_X G_Z$ satisfies the second standard, and may diagnose that the sensor element 11Z is normal when the comparison result between the acceleration $A_Y$ and the centripetal acceleration $V_X G_Z$ does not satisfy the second standard.

The present inventors calculated, by simulation, the acceleration $A_Y$ and the centripetal acceleration $-r_Y Q_Z^2$ detected when the automatic vehicle 5 turns right, and derived the relationship between the acceleration $A_Y$ and the centripetal acceleration $-r_Y Q_Z^2$ exceeding a predetermined threshold value in a case in which the sensor element 13Y is normal and the sensor element 11Z is normal and in a case in which the sensor element 13Y is normal and the sensor element 11Z fails. FIG. 18 shows the relationship between the acceleration $A_Y$ and the centripetal acceleration $-r_Y Q_Z^2$ obtained by the simulation. In FIG. 18, circles indicate the relationship between the acceleration $A_Y$ and the centripetal acceleration $-r_Y Q_Z^2$ when the sensor element 11Z is normal, and triangles indicate the relationship between the acceleration $A_Y$ and the centripetal acceleration $-r_Y Q_Z^2$ when the sensor element 11Z fails. As shown in FIG. 18, when the sensor element 11Z is normal, the acceleration $A_Y$ and the centripetal acceleration $-r_Y Q_Z^2$ substantially coincide with each other. Therefore, a slope of an approximate straight line indicating the relationship between the acceleration $A_Y$ and the centripetal acceleration $-r_Y \Omega_Z^2$, that is, a ratio of the acceleration $A_Y$ to the centripetal acceleration $-r_Y Q_Z^2$ is approximately 1. In contrast, when the sensor element 11Z fails, the ratio of the acceleration $A_Y$ to the centripetal acceleration $-r_Y Q_Z^2$ is not substantially 1.

Therefore, according to step S223, for example, the failure diagnosis circuit 100 may diagnose the failure of the sensor element 11Z based on whether the ratio of the acceleration $A_Y$ to the centripetal acceleration $-r_Y Q_Z^2$ satisfies the second standard with a predetermined range including 1 as the second standard. Alternatively, the failure diagnosis circuit 100 may diagnose the failure of the sensor element 11Z based on whether the ratio of the acceleration $A_Y$ to the centripetal acceleration $-r_Y G_Z^2$ satisfies the second standard with a predetermined range including 1 as the second standard.

Two or more of the sensor element 11Z, the sensor element 12Z, and the sensor element 13Y are unlikely to simultaneously fail, and therefore, in step S223, the failure diagnosis circuit 100 diagnoses that the sensor element 12Z is normal when the sensor element 11Z fails, and diagnoses that the sensor element 12Z fails when the sensor element 11Z is normal.

Then, the failure diagnosis circuit 100 repeats the processing in steps S11, S12, S13, S221, S222, and S223 until the failure diagnosis is ended in step S30 shown in FIG. 2.

According to the failure diagnosis method in the third embodiment described above, the same effects as those of the first embodiment can be obtained.

1-4. Fourth Embodiment

Hereinafter, regarding a method for diagnosing a failure in a sensor module according to the fourth embodiment, the same components as those in the first to third embodiments are denoted by the same reference signs, description overlapping with that of the first to third embodiments is omitted or simplified, and contents different from those of the first to third embodiments will be mainly described.

A configuration example of a system for implementing the failure diagnosis method according to the fourth embodiment is the same as that of FIG. 1, and therefore, illustration and description thereof will be omitted. The flowchart showing the overall procedure of the failure diagnosis method according to the fourth embodiment is the same as FIG. 2, and therefore, illustration and description thereof will be omitted. However, in the fourth embodiment, the procedure of the second diagnosis step S20 shown in FIG. 2 is different from that of the first embodiment.

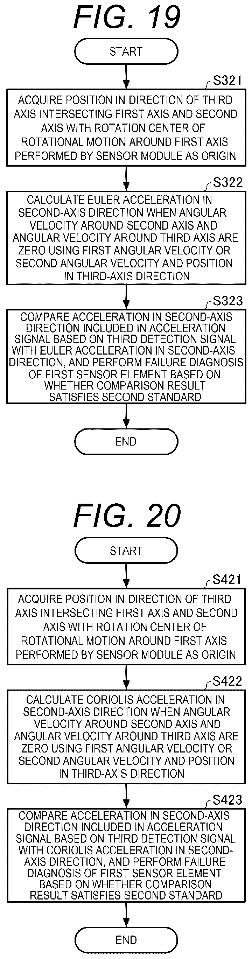

FIG. 19 is a flowchart showing an example of the procedure of the second diagnosis step S20 shown in FIG. 2 in the fourth embodiment.

As shown in FIG. 19, in step S321, the failure diagnosis device 2 acquires a position in a third-axis direction intersecting the first axis and the second axis with a rotation center of a rotational motion around the first axis performed by the sensor module 1 as an origin. The first axis, the second axis, and the third axis may be perpendicular to one another. Note that the meaning of "the first axis, the second axis, and the third axis are perpendicular to one another" includes not only a case in which an angle formed by the first axis and the second axis, an angle formed by the second axis and the third axis, and an angle formed by the third axis and the first axis are all strictly 90°, but also a case in which the angle formed by the first axis and the second axis, the angle formed by the second axis and the third axis, and the angle formed by the third axis and the first axis have an error with respect to 90° due to a manufacturing error of the sensor module 1. For example, the first axis may be an axis perpendicular to a placement surface of the sensor module 1, and the second axis and the third axis may be axes parallel to the placement surface of the sensor module 1.

The position in the third-axis direction can also be said to be a distance from the rotation center to the sensor module 1. For example, the failure diagnosis device 2 can acquire the position in the third-axis direction by map matching or the like using position information or map data obtained from the GNSS and an external sensor such as a LiDAR or a camera. The failure diagnosis device 2 can also calculate the position in the third-axis direction using the left and right wheel speeds obtained from the wheel speed sensors.

Next, in step S322, the failure diagnosis device 2 calculates, using the first angular velocity or the second angular velocity and the position in the third-axis direction acquired in step S321, the Euler acceleration in the second-axis direction when the angular velocity around the second axis and the angular velocity around the third axis are zero. The failure diagnosis device 2 may calculate the Euler acceleration in the second-axis direction using the first angular velocity and the position in the third-axis direction, or may calculate the Euler acceleration in the second-axis direction using the second angular velocity and the position in the third-axis direction.

Then, in step S323, the failure diagnosis device 2 compares the acceleration in the second-axis direction included in the acceleration signal based on the third detection signal output from the third sensor element 13 with the Euler acceleration in the second-axis direction calculated in step S322, and performs the failure diagnosis of the first sensor element 11 based on whether the comparison result satisfies the second standard. For example, when the Euler acceleration in the second-axis direction is calculated using the first angular velocity and the position in the third-axis direction in step S322, the failure diagnosis device 2 may diagnose that the first sensor element 11 is normal when the comparison result between the acceleration in the second-axis direction and the Euler acceleration in the second-axis direction satisfies the second standard, and may diagnose that the first sensor element 11 fails when the comparison result between the acceleration in the second-axis direction and the Euler acceleration in the second-axis direction does not satisfy the second standard. Alternatively, when the Euler acceleration in the second-axis direction is calculated using the second angular velocity and the position in the third-axis direction in step S322, the failure diagnosis device 2 may diagnose that the first sensor element 11 fails when the comparison result between the acceleration in the second-axis direction and the Euler acceleration in the second-axis direction satisfies the second standard, and may diagnose that the first sensor element 11 is normal when the comparison result between the acceleration in the second-axis direction and the Euler acceleration in the second-axis direction does not satisfy the second standard.

For example, when the failure diagnosis device 2 calculates a difference between the acceleration in the second-axis direction and the Euler acceleration in the second-axis direction in step S323, the second standard may be a predetermined range including 0. For example, when the failure diagnosis device 2 calculates the ratio of the acceleration in the second-axis direction to the Euler acceleration in the second-axis direction in step S323, the second standard may be a predetermined range including 1.

Two or more of the first sensor element 11, the second sensor element 12, and the third sensor element 13 are unlikely to simultaneously fail, and therefore, in step S323, the failure diagnosis device 2 diagnoses that the second sensor element 12 is normal when the first sensor element 11 fails, and diagnoses that the second sensor element 12 fails when the first sensor element 11 is normal.

Hereinafter, as a specific example of the sensor module 1 and the failure diagnosis device 2, the failure diagnosis method according to the fourth embodiment will be described in detail with reference to the configuration example shown in FIG. 4 in the first embodiment. The configuration and function of the sensor module 1 are the same as those of the first embodiment, and the description thereof is omitted. In the failure diagnosis device 2, the function of the interface circuit 101 is the same as that of the first embodiment, and the description thereof is omitted.

In the fourth embodiment, the control circuit 102 acquires the detection data SD1Z, SD2Z, SD3X and the pitch angle $\theta$ from the processing device 30 via the interface circuit 101 in a period in which the automatic vehicle 5 performs a rotational motion for turning right or left.

The low-pass filter 103 acquires the detection data SD1Z, SD2Z, and SD3X from the control circuit 102, and performs low-pass filter processing to reduce high-frequency noise components. The low-pass filtered detection data SD1Z is input to the failure diagnosis circuit 100 as first angular velocity data G1Z. The first angular velocity data G1Z includes the angular velocity $\Omega_Z$ based on the angular velocity around the Z axis detected by the sensor element 11Z. The low-pass filtered detection data SD2Z is input to the failure diagnosis circuit 100 as second angular velocity data G2Z. The second angular velocity data G2Z includes the angular velocity $G_Z$ based on the angular velocity around the Z axis detected by the sensor element 12Z.

The gravitational acceleration separation circuit 104 separates a gravitational acceleration component from the low-pass filtered detection data SD3X. Specifically, the gravitational acceleration separation circuit 104 calculates $-g\sin\theta$, which is a gravitational acceleration component in the X-axis direction of the gravitational acceleration vector $a_g$, by using the pitch angle $\theta$, and subtracts $-g\sin\theta$ from the acceleration in the X-axis direction included in the low-pass filtered detection data SD3X. The detection data SD3X from which the gravitational acceleration component is separated by the gravitational acceleration separation circuit 104 is input to the failure diagnosis circuit 100 as the acceleration data A3X. The acceleration data A3X includes the acceleration $A_X$ based on the acceleration in the X-axis direction detected by the sensor element 13X.

The failure diagnosis circuit 100 performs failure diagnosis of the sensor element 11Z using the first angular velocity data G1Z, the second angular velocity data G2Z, and the acceleration data A3X. Specifically, the failure diagnosis circuit 100 performs the failure diagnosis of the sensor element 11Z according to the procedures shown in FIGS. 2 and 19. Here, the sensor elements 11Z, 12Z, and 13X correspond to the first sensor element 11, the second sensor element 12,

and the third sensor element 13 shown in FIG. 1, respectively, and the detection signals SS1Z, SS2Z, and SS3X correspond to the first detection signal, the second detection signal, and the third detection signal shown in FIG. 2, respectively. The first angular velocity data G1Z, the second angular velocity data G2Z, and the acceleration data A3X correspond to the first angular velocity signal, the second angular velocity signal, and the acceleration signal shown in FIG. 2, respectively, and the Z axis, the X axis, and the Y axis correspond to the first axis, the second axis, and the third axis shown in FIGS. 2 and 19, respectively. The angular velocity $\Omega_Z$ around the Z axis included in the first angular velocity data G1Z, the angular velocity $G_Z$ around the Z axis included in the second angular velocity data G2Z, and the acceleration $A_X$ in the X-axis direction included in the acceleration data A3X correspond to the first angular velocity, the second angular velocity, and the acceleration in the second-axis direction shown in FIGS. 2 and 19, respectively.

First, as in the first embodiment, the failure diagnosis circuit 100 sequentially performs step S11, step S12, and step S13 in FIG. 2.

In step S12, when the comparison result in step S11 does not satisfy the first standard, the failure diagnosis circuit 100 performs failure diagnosis of the sensor element 11Z using the acceleration data A3X in the second diagnosis step S20.

Specifically, first, in step S321 shown in FIG. 19, the failure diagnosis circuit 100 acquires a position $r_Y$ in the Y-axis direction. The failure diagnosis circuit 100 can acquire the position $r_Y$ in the Y-axis direction by map matching or the like using position information or map data obtained from the GNSS and an external sensor such as a LiDAR or a camera. The failure diagnosis circuit 100 can also calculate the position $r_Y$ in the Y-axis direction using the left and right wheel speeds obtained from the wheel speed sensors.

Next, in step S322, the failure diagnosis circuit 100 calculates, using the angular velocity $\Omega_Z$ or the angular velocity $G_Z$ and the position $r_Y$ in the Y-axis direction acquired in step S321, the Euler acceleration in the X-axis direction when the angular velocity $\omega_X$ around the X-axis and the angular velocity $\omega_Y$ around the Y-axis are zero. Specifically, the failure diagnosis circuit 100 calculates the Euler acceleration $-r_Y O_Z'$ in the X-axis direction corresponding to the X-axis component of the Euler acceleration vector $a_{eul}$ shown in the above Formula (12) using the angular velocity $\Omega_Z$ and the position $r_Y$. Note that $\Omega_Z'$ represents a differential of $\Omega_Z$. Alternatively, the failure diagnosis circuit 100 calculates the Euler acceleration $-r_Y G_Z'$ in the X-axis direction using the angular velocity $G_Z$ and the position $r_Y$. Note that $G_Z'$ represents a differential of $G_Z$.

Then, in step S323, the failure diagnosis circuit 100 compares the acceleration $A_X$ in the X-axis direction included in the acceleration data A3X with the Euler acceleration in the X-axis direction calculated in step S322, and performs the failure diagnosis of the sensor element 11Z based on whether the comparison result satisfies the second standard. For example, when the Euler acceleration $-r_Y O_Z'$ in the X-axis direction is calculated in step S322, the failure diagnosis device 2 may diagnose that the sensor element 11Z is normal when the comparison result between the acceleration $A_X$ and the Euler acceleration $-r_Y O_Z'$ satisfies the second standard, and may diagnose that the sensor element 11Z fails when the comparison result between the acceleration $A_X$ and the Euler acceleration $-r_Y O_Z'$ does not satisfy the second standard. Alternatively, when the Euler acceleration $-r_Y G_Z'$ in the X-axis direction is calculated in step S322, the failure diagnosis circuit 100 may diagnose that the sensor element 11Z fails when the comparison result between the acceleration $A_X$ and the Euler acceleration $-r_Y G_Z'$ satisfies the second standard, and may diagnose that the sensor element 11Z is normal when the comparison result between the acceleration $A_X$ and the Euler acceleration $-r_Y G_Z'$ does not satisfy the second standard.

In step S323, for example, the failure diagnosis circuit 100 may diagnose the failure of the sensor element 11Z based on whether a ratio of the acceleration $A_X$ to the Euler acceleration $-r_Y O_Z'$ satisfies the second standard with a predetermined range including 1 as the second standard. Alternatively, the failure diagnosis circuit 100 may diagnose the failure of the sensor element 11Z based on whether a ratio of the acceleration $A_X$ to the Euler acceleration $-r_Y G_Z'$ satisfies the second standard with a predetermined range including 1 as the second standard.

Two or more of the sensor element 11Z, the sensor element 12Z, and the sensor element 13X are unlikely to simultaneously fail, and therefore, in step S323, the failure diagnosis circuit 100 diagnoses that the sensor element 12Z is normal when the sensor element 11Z fails, and diagnoses that the sensor element 12Z fails when the sensor element 11Z is normal.

Then, the failure diagnosis circuit 100 repeats the processing in steps S11, S12, S13, S321, S322, and S323 until the failure diagnosis is ended in step S30 shown in FIG. 2.

According to the failure diagnosis method in the fourth embodiment described above, the same effects as those of the first embodiment can be obtained.

According to the failure diagnosis method in the fourth embodiment described above, the same effects as those of the first embodiment can be obtained.

1-5. Fifth Embodiment

Hereinafter, regarding a method for diagnosing a failure in a sensor module according to the fifth embodiment, the same components as those in any one of the first to the fourth embodiments are denoted by the same reference signs, the description overlapping with any of the first embodiment to the fourth embodiment is omitted or simplified, and the contents different from any of the first to the fourth embodiments will be mainly described.

A configuration example of a system for implementing the failure diagnosis method according to the fifth embodiment is the same as that of FIG. 1, and therefore, illustration and description thereof will be omitted. The flowchart showing the overall procedure of the failure diagnosis method according to the fifth embodiment is the same as FIG. 2, and therefore, the illustration and description thereof will be omitted. However, in the fifth embodiment, the procedure of the second diagnosis step S20 shown in FIG. 2 is different from that of the first embodiment.

FIG. 20 is a flowchart showing an example of the procedure of the second diagnosis step S20 shown in FIG. 2 in the fifth embodiment.

As shown in FIG. 20, in step S421, the failure diagnosis device 2 acquires a position in a third-axis direction intersecting the first axis and the second axis with a rotation center of a rotational motion around the first axis performed by the sensor module 1 as an origin. The first axis, the second axis, and the third axis may be perpendicular to one another. Note that the meaning of "the first axis, the second axis, and the third axis are perpendicular to one another" includes not only a case in which an angle formed by the first axis and the second axis, an angle formed by the second axis and the third axis, and an angle formed by the third axis and the first axis are all strictly 90°, but also a case in which the angle formed by the first axis and the second axis, the angle formed by the second axis and the third axis, and the angle formed by the third axis and the first axis have an error with respect to 90° due to a manufacturing error of the sensor module 1. For example, the first axis may be an axis perpendicular to a placement surface of the sensor module 1, and the second axis and the third axis may be axes parallel to the placement surface of the sensor module 1.

The position in the third-axis direction can also be said to be a distance from the rotation center to the sensor module 1. For example, the failure diagnosis device 2 can acquire the position in the third-axis direction by map matching or the like using position information or map data obtained from the GNSS and an external sensor such as a LiDAR or a camera. The failure diagnosis device 2 can also calculate the position in the third-axis direction using the left and right wheel speeds obtained from the wheel speed sensors.

Next, in step S422, the failure diagnosis device 2 calculates, using the first angular velocity or the second angular velocity and the position in the third-axis direction acquired in step S421, the Coriolis acceleration in the second-axis direction when the angular velocity around the second axis and the angular velocity around the third axis are zero. The failure diagnosis device 2 may calculate the Coriolis acceleration in the second-axis direction using the first angular velocity and the position in the third-axis direction, or may calculate the Coriolis acceleration in the second-axis direction using the second angular velocity and the position in the third-axis direction.

Then, in step S423, the failure diagnosis device 2 compares the acceleration in the second-axis direction included in the acceleration signal based on the third detection signal output from the third sensor element 13 with the Coriolis acceleration in the second-axis direction calculated in step S422, and performs the failure diagnosis of the first sensor element 11 based on whether the comparison result satisfies the second standard. For example, when the Coriolis acceleration in the second-axis direction is calculated using the first angular velocity and the position in the third-axis direction in step S422, the failure diagnosis device 2 may diagnose that the first sensor element 11 is normal when the comparison result between the acceleration in the second-axis direction and the Coriolis acceleration in the second-axis direction satisfies the second standard, and may diagnose that the first sensor element 11 fails when the comparison result between the acceleration in the second-axis direction and the Coriolis acceleration in the second-axis direction does not satisfy the second standard. Alternatively, when the Coriolis acceleration in the second-axis direction is calculated using the second angular velocity and the position in the third-axis direction in step S422, the failure diagnosis device 2 may diagnose that the first sensor element 11 fails when the comparison result between the acceleration in the second-axis direction and the Coriolis acceleration in the second-axis direction satisfies the second standard, and may diagnose that the first sensor element 11 is normal when the comparison result between the acceleration in the second-axis direction and the Coriolis acceleration in the second-axis direction does not satisfy the second standard.

For example, when the failure diagnosis device 2 calculates a difference between the acceleration in the second-axis direction and the Coriolis acceleration in the second-axis direction in step S423, the second standard may be a predetermined range including 0. For example, when the failure diagnosis device 2 calculates a ratio of the acceleration in the second-axis direction to the Coriolis acceleration in the second-axis direction in step S423, the second standard may be a predetermined range including 1.

Two or more of the first sensor element 11, the second sensor element 12, and the third sensor element 13 are unlikely to simultaneously fail, and therefore, in step S423, the failure diagnosis device 2 diagnoses that the second sensor element 12 is normal when the first sensor element 11 fails, and diagnoses that the second sensor element 12 fails when the first sensor element 11 is normal.

Hereinafter, as a specific example of the sensor module 1 and the failure diagnosis device 2, the failure diagnosis method according to the fifth embodiment will be described in detail with reference to the configuration example shown in FIG. 4 in the first embodiment. The configuration and function of the sensor module 1 are the same as those of the first embodiment, and the description thereof is omitted. In the failure diagnosis device 2, the functions of the interface circuit 101, the control circuit 102, the low-pass filter 103, and the gravitational acceleration separation circuit 104 are the same as those in the fourth embodiment, and the description thereof is omitted.

In the fifth embodiment, the failure diagnosis circuit 100 performs failure diagnosis of the sensor element 11Z using the first angular velocity data G1Z, the second angular velocity data G2Z, and the acceleration data A3X. Specifically, the failure diagnosis circuit 100 performs the failure diagnosis of the sensor element 11Z according to the procedures shown in FIGS. 2 and 20. Here, the sensor elements 11Z, 12Z, and 13X correspond to the first sensor element 11, the second sensor element 12, and the third sensor element 13 shown in FIG. 1, respectively, and the detection signals SS1Z, SS2Z, and SS3X correspond to the first detection signal, the second detection signal, and the third detection signal shown in FIG. 2, respectively. The first angular velocity data G1Z, the second angular velocity data G2Z, and the acceleration data A3X correspond to the first angular velocity signal, the second angular velocity signal, and the acceleration signal shown in FIG. 2, respectively, and the Z axis, the X axis, and the Y axis correspond to the first axis, the second axis, and the third axis shown in FIGS. 2 and 20, respectively. The angular velocity $\Omega_Z$ around the Z axis included in the first angular velocity data G1Z, the angular velocity $G_Z$ around the Z axis included in the second angular velocity data G2Z, and the acceleration $A_X$ in the X-axis direction included in the acceleration data A3X correspond to the first angular velocity, the second angular velocity, and the acceleration in the second-axis direction shown in FIGS. 2 and 20, respectively.

First, as in the first embodiment, the failure diagnosis circuit 100 sequentially performs step S11, step S12, and step S13 in FIG. 2.

In step S12, when the comparison result in step S11 does not satisfy the first standard, the failure diagnosis circuit 100 performs failure diagnosis of the sensor element 11Z using the acceleration data A3X in the second diagnosis step S20.

Specifically, first, in step S421 shown in FIG. 20, the failure diagnosis circuit 100 acquires a position $r_Y$ in the Y-axis direction. The failure diagnosis circuit 100 can acquire the position $r_Y$ in the Y-axis direction by map matching or the like using position information or map data obtained from the GNSS and an external sensor such as a LiDAR or a camera. The failure diagnosis circuit 100 can also calculate the position $r_Y$ in the Y-axis direction using the left and right wheel speeds obtained from the wheel speed sensors.

Next, in step S422, the failure diagnosis circuit 100 calculates, using the angular velocity $\Omega_Z$ or the angular velocity $G_Z$ and the position $r_Y$ in the Y-axis direction acquired in step S421, the Coriolis acceleration in the X-axis direction when the angular velocity $\omega_X$ around the X-axis and the angular velocity $\omega_Y$ around the Y-axis are zero. Specifically, the failure diagnosis circuit 100 calculates Coriolis acceleration $-2r_Y'\Omega_Z$ in the X-axis direction corresponding to the X-axis component of the Coriolis acceleration vector $a_{col}$ shown in the above Formula (13) using the angular velocity $\Omega_Z$ and the position ry. Note that ry' represents a differential of ry. Alternatively, the failure diagnosis circuit 100 calculates the Coriolis acceleration $-2r_Y'G_Z$ in the X-axis direction using the angular velocity $G_Z$ and the position $r_Y$.

Then, in step S423, the failure diagnosis circuit 100 compares the acceleration $A_X$ in the X-axis direction included in the acceleration data A3X with the Coriolis acceleration in the X-axis direction calculated in step S422, and performs the failure diagnosis of the sensor element 11Z based on whether the comparison result satisfies the second standard. For example, when the Coriolis acceleration $-2r_Y'\Omega_Z$ in the X-axis direction is calculated in step S422, the failure diagnosis device 2 may diagnose that the sensor element 11Z is normal when the comparison result between the acceleration $A_X$ and the Coriolis acceleration $-2r_Y'\Omega_Z$ satisfies the second standard, and may diagnose that the sensor element 11Z fails when the comparison result between the acceleration $A_X$ and the Coriolis acceleration $-2r_Y'\Omega_Z$ does not satisfy the second standard. Alternatively, when the Coriolis acceleration $-2r_Y'G_Z$ in the X-axis direction is calculated in step S422, the failure diagnosis circuit 100 may diagnose that the sensor element 11Z fails when the comparison result between the acceleration $A_X$ and the Coriolis acceleration $-2r_Y'G_Z$ satisfies the second standard, and may diagnose that the sensor element 11Z is normal when the comparison result between the acceleration $A_X$ and the Coriolis acceleration $-2r_Y'G_Z$ does not satisfy the second standard.

In step S423, for example, the failure diagnosis circuit 100 may diagnose the failure of the sensor element 11Z based on whether a ratio of the acceleration $A_X$ to the Coriolis acceleration $-2r_Y'\Omega_Z$ satisfies the second standard with a predetermined range including 1 as the second standard. Alternatively, the failure diagnosis circuit 100 may diagnose the failure of the sensor element 11Z based on whether a ratio of the acceleration $A_X$ to the Coriolis acceleration $-2r_Y'G_Z$ satisfies the second standard with a predetermined range including 1 as the second standard.

Two or more of the sensor element 11Z, the sensor element 12Z, and the sensor element 13X are unlikely to simultaneously fail, and therefore, in step S423, the failure diagnosis circuit 100 diagnoses that the sensor element 12Z is normal when the sensor element 11Z fails, and diagnoses that the sensor element 12Z fails when the sensor element 11Z is normal.

Then, the failure diagnosis circuit 100 repeats the processing in steps S11, S12, S13, S421, S422, and S423 until the failure diagnosis is ended in step S30 shown in FIG. 2.

According to the failure diagnosis method in the fifth embodiment described above, the same effects as those of the first embodiment can be obtained.

2. Sensor Module

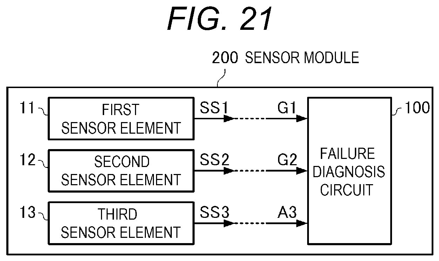

FIG. 21 is a diagram showing a functional configuration example of a sensor module according to the embodiment. As shown in FIG. 21, a sensor module 200 according to the embodiment includes the first sensor element 11, the second sensor element 12, the third sensor element 13, and the failure diagnosis circuit 100.

The first sensor element 11 detects an angular velocity around the first axis and outputs a first detection signal SS1. The second sensor element 12 detects an angular velocity around the first axis and outputs a second detection signal SS2. That is, both the first sensor element 11 and the second sensor element 12 detect the angular velocity around the first axis, but the first sensor element 11 may have detection accuracy higher than that of the second sensor element 12.

The third sensor element 13 detects an acceleration in a second-axis direction intersecting the first axis and outputs a third detection signal SS3. The first axis and the second axis may be perpendicular to each other. For example, the first axis may be an axis perpendicular to a placement surface of the sensor module 1, and the second axis may be an axis parallel to the placement surface of the sensor module 1.

The failure diagnosis circuit 100 is connected to the sensor module 1 and performs failure diagnosis of the first sensor element 11 by the failure diagnosis method according to any one of the first to fifth embodiments. Specifically, the failure diagnosis circuit 100 compares a first angular velocity with a second angular velocity, and diagnoses that the first sensor element 11 is normal when the comparison result satisfies the first standard. The first angular velocity is an angular velocity around the first axis included in a first angular velocity signal G1 based on the first detection signal SS1, and the second angular velocity is an angular velocity around the first axis included in a second angular velocity signal G2 based on the second detection signal SS2. When the comparison result between the first angular velocity and the second angular velocity does not satisfy the first standard, the failure diagnosis circuit 100 performs the failure diagnosis of the first sensor element 11 using an acceleration signal A3 based on the third detection signal SS3.

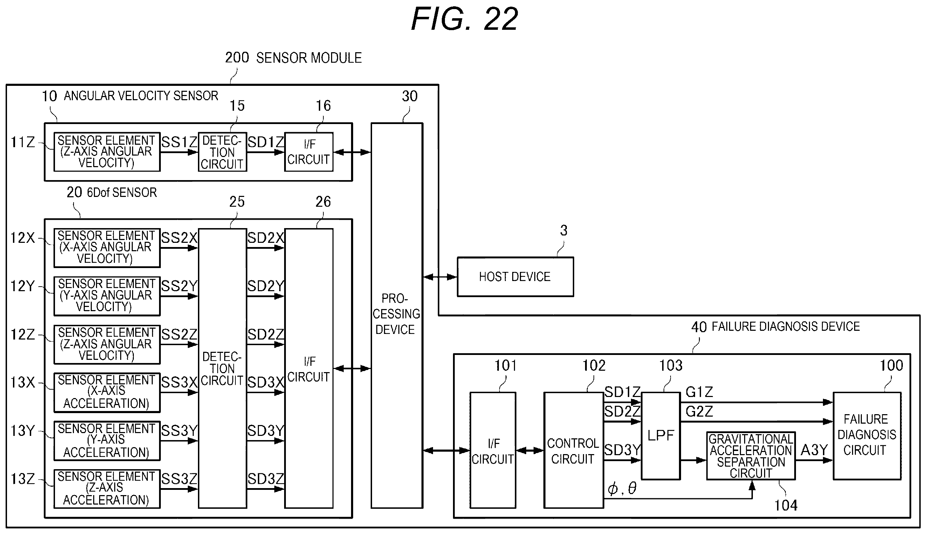

FIG. 22 is a diagram showing a specific configuration example of the sensor module 200. In FIG. 22, the same components as those in FIG. 4 are denoted by the same reference signs. In the example shown in FIG. 22, the sensor module 200 includes the angular velocity sensor 10, the 6Dof sensor 20, the processing device 30, and a failure diagnosis device 40. The sensor module 200 may have a configuration omitting or changing a part of the components in FIG. 22, or adding other components to the components in FIG. 22. The angular velocity sensor 10, the 6Dof sensor 20, the processing device 30, and the failure diagnosis device 40 are accommodated in a housing (not shown). The configurations and functions of the angular velocity sensor 10, the 6Dof sensor 20, and the processing device 30 are as described with reference to FIG. 4, and therefore, the description thereof is omitted.

As shown in FIG. 22, the failure diagnosis device 40 includes the failure diagnosis circuit 100, the interface circuit 101, the control circuit 102, the low-pass filter 103, and the gravitational acceleration separation circuit 104. The functions of the interface circuit 101, the control circuit 102, the low-pass filter 103, and the gravitational acceleration separation circuit 104 are the same as those described with reference to FIG. 4, and therefore, description thereof will be omitted.

The failure diagnosis circuit 100 performs failure diagnosis of the sensor element 11Z using the first angular velocity data G1Z, the second angular velocity data G2Z, and the acceleration data A3Y. Specifically, the failure diagnosis circuit 100 compares the angular velocity $\Omega_Z$ around the Z axis included in the first angular velocity data G1Z based on the detection signal SS1Z with the angular velocity $G_Z$ around the Z axis included in the second angular velocity data G2Z based on the detection signal SS2Z, and diagnoses that the sensor element 11Z is normal when the comparison result satisfies a first standard. When the comparison result between the angular velocity $\Omega_Z$ and the angular velocity $G_Z$ does not satisfy the first standard, the failure diagnosis circuit 100 performs the failure diagnosis of the sensor element 11Z using the acceleration data A3Y based on the detection signal SS3Y. In FIG. 22, the sensor elements 11Z, 12Z, and 13X correspond to the first sensor element 11, the second sensor element 12, and the third sensor element 13 shown in FIG. 21, respectively, and the detection signals SS1Z, SS2Z, and SS3Y correspond to the first detection signal SS1, the second detection signal SS2, and the third detection signal SS3 shown in FIG. 21, respectively. The first angular velocity data G1Z, the second angular velocity data G2Z, and the acceleration data A3Y correspond to the first angular velocity signal G1, the second angular velocity signal G2, and the acceleration signal A3 shown in FIG. 21, respectively, and the Z axis, the Y axis, and the X axis correspond to the first axis, the second axis, and the third axis, respectively. The angular velocity $\Omega_Z$ around the Z axis included in the first angular velocity data G1Z, the angular velocity $G_Z$ around the Z axis included in the second angular velocity data G2Z, and the acceleration Ay in the Y-axis direction included in the acceleration data A3Y correspond to the first angular velocity, the second angular velocity, and the acceleration in the second-axis direction, respectively.

The failure diagnosis circuit 100 performs failure diagnosis of the sensor element 11Z according to the procedures shown in FIG. 2 and FIG. 3, FIG. 15, or FIG. 17. These procedures are as described above, and therefore, description thereof is omitted.

Other configurations and functions of the sensor module 200 are the same as those of the sensor module 1 shown in FIG. 4, and therefore, description thereof will be omitted.

In the sensor module 200, as described in the fourth and fifth embodiments, the failure diagnosis circuit 100 may also perform the failure diagnosis of the sensor element 11Z using the first angular velocity data G1Z, the second angular velocity data G2Z, and the acceleration data A3X. Specifically, the failure diagnosis circuit 100 may perform the failure diagnosis of the sensor element 11Z according to the procedures shown in FIG. 2 and FIG. 19 or FIG. 20. These procedures are as described above, and therefore, description thereof is omitted.

According to the sensor module 200 in the embodiment described above, the same effects as those of the failure diagnosis methods according to the above first to fifth embodiments can be obtained.

3. Modification

The present disclosure is not limited to the embodiment, and various modifications can be made within the scope of the invention.

For example, in the above embodiments, an example in which the sensor module 1 is mounted on the automatic vehicle 5 has been described, and the sensor module 1 may be mounted on a vehicle other than an automatic vehicle. Examples of the vehicle include, in addition to an automatic vehicle, an aircraft such as a jet machine or a helicopter, a ship, a rocket, an artificial satellite, and a railway vehicle.

The specific procedure of the second diagnosis step S20 is not limited to the procedure shown in FIG. 3, FIG. 15, FIG. 17, FIG. 19, or FIG. 20. For example, the failure diagnosis device 2, the failure diagnosis device 40, or the failure diagnosis circuit 100 may perform the failure diagnosis of the sensor element 11Z based on whether a distribution of the angular velocity $\Omega_Z$ or the angular velocity $G_Z$ and the acceleration $A_Y$ satisfies the second standard with a range of the ellipse shown in FIG. 12 as the second standard. For example, the failure diagnosis device 2, the failure diagnosis device 40, or the failure diagnosis circuit 100 may input the angular velocity $\Omega_Z$ or the angular velocity $G_Z$ and the acceleration $A_Y$ to Kerman filter to perform the failure diagnosis of the sensor element 11Z.

For example, in the above embodiments, the sensor module 1 or the sensor module 200 includes the angular velocity sensor 10 and the 6Dof sensor 20, and other sensors may be provided instead of the angular velocity sensor 10 and the 6Dof sensor 20. For example, both the sensor module 1 and the sensor module 200 may include two angular velocity sensors for detecting the angular velocity in the Z axis and a three-axis acceleration sensor, or may include two 6Dof sensors.

In the above embodiments, the processing device 30 performs an operation of the posture, the speed, the angle, and the like of the sensor module 1, and the host device 3 may perform an operation of the posture, the speed, the angle, and the like of the sensor module 1.

The above embodiments and modifications are examples, and the present disclosure is not limited thereto. For example, the embodiments and the modifications may be combined as appropriate.

The following contents are derived from the embodiments and modifications described above.

A method for diagnosing a failure in a sensor module including a first sensor element configured to detect an angular velocity around a first axis and output a first detection signal, a second sensor element configured to detect an angular velocity around the first axis and output a second detection signal, and a third sensor element configured to detect an acceleration in a second-axis direction intersecting the first axis and output a third detection signal, the method including:

a first diagnosis step of comparing a first angular velocity with a second angular velocity and diagnosing that the first sensor element and the second sensor element are normal when a comparison result satisfies a first standard, the first angular velocity being the angular velocity around the first axis included in a first angular velocity signal based on the first detection signal, the second angular velocity being the angular velocity around the first axis included in a second angular velocity signal based on the second detection signal; and

a second diagnosis step of performing failure diagnosis of the first sensor element using the first angular velocity signal or the second angular velocity signal and an acceleration signal based on the third detection signal when the comparison result does not satisfy the first standard.

In this failure diagnosis method, the failure diagnosis device can diagnose whether the first sensor element and the second sensor element are normal or whether the first sensor element or the second sensor element fails in the first diagnosis step on the premise that two or more of the first sensor element, the second sensor element, and the third sensor element are unlikely to simultaneously fail. When the failure diagnosis device diagnoses that the first sensor element or the second sensor element fails in the first diagnosis step, the third sensor element is normal on the above premise. Therefore, the failure diagnosis device can diagnose, using the first angular velocity signal or the second angular velocity signal and the acceleration signal in the second diagnosis step, whether the first sensor element fails. In the second diagnosis step, when the failure diagnosis device diagnoses that the first sensor element is normal, the second sensor element fails, and when the failure diagnosis device diagnoses that the first sensor element fails, the second sensor element is normal. In this failure diagnosis method, since both the first sensor element and the second sensor element detect the angular velocity around the first axis, the difference between the first angular velocity signal and the second angular velocity signal is small, and the failure diagnosis device can easily and accurately diagnose whether the first sensor element and the second sensor element are normal or whether the first sensor element or the second sensor element fails in the first diagnosis step. When the failure diagnosis device diagnoses that the first sensor element and the second sensor element are normal in the first diagnosis step, the failure diagnosis device does not need to perform the second diagnosis step. Therefore, according to the failure diagnosis method, the failure diagnosis device can efficiently diagnose which of the first sensor element and the second sensor element for detecting the angular velocity around the first axis fails.

The method for diagnosing a failure in a sensor module, in which
the first sensor element may have detection accuracy higher than that of the second sensor element.

According to this failure diagnosis method, whether the first sensor element is normal or fails can be diagnosed. Accordingly, for example, the sensor module or the host device connected to the sensor module can perform the required operation with high accuracy using the first detection signal output from the first sensor element with high detection accuracy when the first sensor element is normal, and can continue the required calculation using the second detection signal output from the second sensor element when the first sensor element fails.

The method for diagnosing a failure in a sensor module, in which

the second diagnosis step may include
calculating a ratio of the acceleration in the second-axis direction included in the acceleration signal to the first angular velocity or the second angular velocity, and
performing failure diagnosis of the first sensor element based on whether the ratio satisfies a second standard.

The method for diagnosing a failure in a sensor module, in which
the second diagnosis step may include

acquiring a speed in a third-axis direction intersecting the first axis and the second axis,
calculating, using the first angular velocity or the second angular velocity and the speed in the third-axis direction, a centripetal acceleration in the second-axis direction when an angular velocity around the second axis and an angular velocity around the third axis are zero, and
comparing the acceleration in the second-axis direction included in the acceleration signal with the centripetal acceleration in the second-axis direction and performing the failure diagnosis of the first sensor element based on whether a comparison result satisfies a second standard.

The method for diagnosing a failure in a sensor module, in which
the second diagnosis step may include

acquiring a position in the second-axis direction with a rotation center of a rotational motion around the first axis performed by the sensor module as an origin,
calculating, using the first angular velocity or the second angular velocity and the position in the second-axis direction, a centripetal acceleration in the second-axis direction when an angular velocity around the second axis and an angular velocity around a third axis intersecting the first axis and the second axis are zero, and
comparing the acceleration in the second-axis direction included in the acceleration signal with the centripetal acceleration in the second-axis direction, and performing the failure diagnosis of the first sensor element based on whether a comparison result satisfies a second standard.

The method for diagnosing a failure in a sensor module, in which
the second diagnosis step may include

acquiring a position in a third-axis direction intersecting the first axis and the second axis with a rotation center of a rotational motion around the first axis performed by the sensor module as an origin,
calculating, using the first angular velocity or the second angular velocity and the position in the third-axis direction, an Euler acceleration in the second-axis direction when an angular velocity around the second axis and an angular velocity around the third axis are zero, and
comparing the acceleration in the second-axis direction included in the acceleration signal with the Euler acceleration in the second-axis direction, and performing the failure diagnosis of the first sensor element based on whether a comparison result satisfies a second standard.

The method for diagnosing a failure in a sensor module, in which
the second diagnosis step may include

acquiring a position in a third-axis direction intersecting the first axis and the second axis with a rotation center of a rotational motion around the first axis performed by the sensor module as an origin,

calculating, using the first angular velocity or the second angular velocity and the position in the third-axis direction, a Coriolis acceleration in the second-axis direction when an angular velocity around the second axis and an angular velocity around the third axis are zero, and

comparing the acceleration in the second-axis direction included in the acceleration signal with the Coriolis acceleration in the second-axis direction and performing the failure diagnosis of the first sensor element based on whether a comparison result satisfies a second standard.

A sensor module according to an aspect including:

a first sensor element configured to detect an angular velocity around a first axis and output a first detection signal;

a second sensor element configured to detect an angular velocity around the first axis and output a second detection signal;

a third sensor element configured to detect an acceleration in a second-axis direction intersecting the first axis and output a third detection signal; and

a failure diagnosis circuit, in which

the failure diagnosis circuit

compares a first angular velocity with a second angular velocity and diagnoses that the first sensor element and the second sensor element are normal when a comparison result satisfies a first standard, the first angular velocity being the angular velocity around the first axis included in a first angular velocity signal based on the first detection signal, the second angular velocity being the angular velocity around the first axis included in a second angular velocity signal based on the second detection signal, and

performs failure diagnosis of the first sensor element using the first angular velocity signal or the second angular velocity signal and an acceleration signal based on the third detection signal when the comparison result does not satisfy the first standard.

In this sensor module, the failure diagnosis circuit can diagnose whether the first sensor element and the second sensor element are normal or whether the first sensor element or the second sensor element fails, on the premise that two or more of the first sensor element, the second sensor element, and the third sensor element are unlikely to simultaneously fail. When the failure diagnosis circuit diagnoses that the first sensor element or the second sensor element fails, the third sensor element is normal based on the above premise. Therefore, the failure diagnosis circuit can diagnose, using the first angular velocity signal or the second angular velocity signal and the acceleration signal, whether the first sensor element fails. When the failure diagnosis circuit diagnoses that the first sensor element is normal, the second sensor element fails, and when the failure diagnosis circuit diagnoses that the first sensor element fails, the second sensor element is normal. In the sensor module, since both the first sensor element and the second sensor element detect the angular velocity around the first axis, the difference between the first angular velocity signal and the second angular velocity signal is small, and the failure diagnosis circuit can easily and accurately diagnose whether the first sensor element and the second sensor element are normal or whether the first sensor element or the second sensor element fails. When the failure diagnosis circuit diagnoses that the first sensor element and the second sensor element are normal, the failure diagnosis circuit does not need to perform the failure diagnosis of the first sensor element using the acceleration signal based on the third detection signal. Accordingly, according to the sensor module, the failure diagnosis circuit can efficiently diagnose which of the first sensor element and the second sensor element for detecting the angular velocity around the first axis fails.

## Claims

1. A method for diagnosing a failure in a sensor module (1) including a first sensor element (11) configured to detect an angular velocity around a first axis and output a first detection signal, a second sensor element (12) configured to detect an angular velocity around the first axis and output a second detection signal, and a third sensor element (13) configured to detect an acceleration in a second-axis direction intersecting the first axis and output a third detection signal, the method comprising:

a first diagnosis step of comparing (S11) a first angular velocity with a second angular velocity and diagnosing that the first sensor element and the second sensor element are normal when a comparison result satisfies (S12) a first standard, the first angular velocity being the angular velocity around the first axis included in a first angular velocity signal based on the first detection signal, the second angular velocity being the angular velocity around the first axis included in a second angular velocity signal based on the second detection signal; **characterised in that** the method further comprises

a second diagnosis step of performing (S20) failure diagnosis of the first sensor element using the first angular velocity signal or the second angular velocity signal and an acceleration signal based on the third detection signal when the comparison result does not satisfy the first standard.

2. The method for diagnosing a failure in a sensor module according to claim 1, wherein
the first sensor element has detection accuracy higher than that of the second sensor element.

3. The method for diagnosing a failure in a sensor module according to claim 1, wherein
the second diagnosis step includes calculating (S21) a ratio of the acceleration in the second-axis direction included in the acceleration signal to the first angular velocity or the second angular velocity, and performing (S22) the failure diagnosis of the first sensor element based on whether the ratio satisfies a second standard.

4. The method for diagnosing a failure in a sensor module according to claim 1, wherein
the second diagnosis step includes acquiring (S121) a speed in a third-axis direction intersecting the first axis and the second axis, calculating (S122), using the first angular velocity or the second angular velocity and the speed in the third-axis direction, a centripetal acceleration in the second-axis direction when an angular velocity around the second axis and an angular velocity around the third axis are zero, and comparing (S123) the acceleration in the second-axis direction included in the acceleration signal with the centripetal acceleration in the second-axis direction and performing the failure diagnosis of the first sensor element based on whether a comparison result satisfies a second standard.

5. The method for diagnosing a failure in a sensor module according to claim 1, wherein
the second diagnosis step includes acquiring (S221) a position in the second-axis direction with a rotation center of a rotational motion around the first axis performed by the sensor module as an origin, calculating (S222), using the first angular velocity or the second angular velocity and the position in the second-axis direction, a centripetal acceleration in the second-axis direction when an angular velocity around the second axis and an angular velocity around a third axis intersecting the first axis and the second axis are zero, and comparing (S223) the acceleration in the second-axis direction included in the acceleration signal with the centripetal acceleration in the second-axis direction, and performing the failure diagnosis of the first sensor element based on whether a comparison result satisfies a second standard.

6. The method for diagnosing a failure in a sensor module according to claim 1, wherein
the second diagnosis step includes acquiring (S321) a position in a third-axis direction intersecting the first axis and the second axis with a rotation center of a rotational motion around the first axis performed by the sensor module as an origin, calculating (S322), using the first angular velocity or the second angular velocity and the position in the third-axis direction, an Euler acceleration in the second-axis direction when an angular velocity around the second axis and an angular velocity around the third axis are zero, and comparing (S323) the acceleration in the second-axis direction included in the acceleration signal with the Euler acceleration in the second-axis direction, and performing the failure diagnosis of the first sensor element based on whether a comparison result satisfies a second standard.

7. The method for diagnosing a failure in a sensor module according to claim 1, wherein
the second diagnosis step includes acquiring (S421) a position in a third-axis direction intersecting the first axis and the second axis with a rotation center of a rotational motion around the first axis performed by the sensor module as an origin, calculating (S422), using the first angular velocity or the second angular velocity and the position in the third-axis direction, a Coriolis acceleration in the second-axis direction when an angular velocity around the second axis and an angular velocity around the third axis are zero, and comparing (S423) the acceleration in the second-axis direction included in the acceleration signal with the Coriolis acceleration in the second-axis direction and performing the failure diagnosis of the first sensor element based on whether a comparison result satisfies a second standard.

8. A sensor module (1) comprising:

a first sensor element (11) configured to detect an angular velocity around a first axis and output a first detection signal;
a second sensor element (12) configured to detect an angular velocity around the first axis and output a second detection signal;
a third sensor element (S13) configured to detect an acceleration in a second-axis direction intersecting the first axis and output a third detection signal; and
a failure diagnosis circuit (2), wherein
the failure diagnosis circuit

compares a first angular velocity with a second angular velocity and diagnoses that the first sensor element and the second sensor element are normal when a comparison result satisfies a first standard, the first angular velocity being the angular velocity around the first axis included in a first angular velocity signal based on the first detection signal, the second angular velocity being the angular velocity around the first axis included in a second angular velocity signal based on the second detection signal, and
**characterised in that** the failure diagnosis circuit
performs failure diagnosis of the first sensor element using the first angular velocity signal or the second angular velocity signal and an acceleration signal based on the third detection signal when the comparison result does not satisfy the first standard.

**Patentansprüche**

1. Verfahren zur Fehlerdiagnose in einem Sensormodul (1), das ein erste Sensorelement (11), das eingerichtet ist, eine Winkelgeschwindigkeit um eine erste Achse zu detektieren und ein erstes Detektionssignal auszugeben, ein zweites Sensorelement (12), das eingerichtet ist, eine Winkelgeschwindigkeit um die erste Achse zu detektieren und ein zweites Detektionssignal auszugeben, und ein drittes Sensorelement (13), das eingerichtet ist, eine Beschleunigung in einer Richtung der zweiten Achse zu detektieren, die die erste Achse schneidet, und ein drittes Detektionssignal auszugeben, beinhaltet, wobei das Verfahren umfasst:

einen ersten Diagnoseschritt zum Vergleichen (S11) einer ersten Winkelgeschwindigkeit mit einer zweiten Winkelgeschwindigkeit und Diagnostizieren, dass das erste Sensorelement und das zweite Sensorelement normal sind, wenn ein Vergleichsergebnis einen ersten Standard erfüllt (S12), wobei die erste Winkelgeschwindigkeit die Winkelgeschwindigkeit um die erste Achse ist, die in einem ersten Winkelgeschwindigkeitssignal basierend auf dem ersten Detektionssignal enthalten ist, die zweite Winkelgeschwindigkeit die Winkelgeschwindigkeit um die erste Achse ist, die in einem zweiten Winkelgeschwindigkeitssignal basierend auf dem zweiten Detektionssignal enthalten ist;
**dadurch gekennzeichnet, dass** das Verfahren ferner umfasst einen zweiten Diagnoseschritt zum Durchführen (S20) einer Fehlerdiagnose des ersten Sensorelements unter Verwendung des ersten Winkelgeschwindigkeitssignals oder des zweiten Winkelgeschwindigkeitssignals und eines Beschleunigungssignals basierend auf dem dritten Detektionssignal, wenn das Vergleichsergebnis den ersten Standard nicht erfüllt.

2. Verfahren zur Fehlerdiagnose in einem Sensormodul nach Anspruch 1, wobei
das erste Sensorelement eine höhere Detektionsgenauigkeit aufweist als jene des zweiten Sensorelements.

3. Verfahren zur Fehlerdiagnose in einem Sensormodul nach Anspruch 1, wobei

der zweite Diagnoseschritt enthält
Berechnen (S21) eines Verhältnisses der Beschleunigung in der Richtung der zweiten Achse, das in dem Beschleunigungssignal enthalten ist, zu der ersten Winkelgeschwindigkeit oder der zweiten Winkelgeschwindigkeit, und
Durchführen (S22) der Fehlerdiagnose des ersten Sensorelements basierend darauf, ob das Verhältnis einen zweiten Standard erfüllt.

4. Verfahren zur Fehlerdiagnose in einem Sensormodul nach Anspruch 1, wobei

der zweite Diagnoseschritt enthält
Erfassen (S121) einer Geschwindigkeit in einer Richtung der dritten Achse, die die erste Achse und die zweite Achse schneidet,
Berechnen (S122), unter Verwendung der ersten Winkelgeschwindigkeit oder der zweiten Winkelgeschwindigkeit und der Geschwindigkeit in der Richtung der dritten Achse, einer zentripetalen Beschleunigung in der Richtung der zweiten Achse, wenn eine Winkelgeschwindigkeit um die zweite Achse und eine Winkelgeschwindigkeit um die dritte Achse null sind, und
Vergleichen (S123) der Beschleunigung in der Richtung der zweiten Achse, die in dem Beschleunigungssignal

27

enthalten ist, mit der zentripetalen Beschleunigung in der Richtung der zweiten Achse und Durchführen der Fehlerdiagnose des ersten Sensorelements basierend darauf, ob ein Vergleichsergebnis einen zweiten Standard erfüllt.

5. Verfahren zur Fehlerdiagnose in einem Sensormodul nach Anspruch 1, wobei

der zweite Diagnoseschritt enthält
Erfassen (S221) einer Position in der Richtung der zweiten Achse mit einem Drehungsmittelpunkt einer Drehbewegung um die erste Achse, die von dem Sensormodul durchgeführt wird, als einen Ursprung,
Berechnen (S222), unter Verwendung der ersten Winkelgeschwindigkeit oder der zweiten Winkelgeschwindigkeit und der Position in der Richtung der zweiten Achse, einer zentripetalen Beschleunigung in der Richtung der zweiten Achse, wenn eine Winkelgeschwindigkeit um die zweite Achse und eine Winkelgeschwindigkeit um eine dritte Achse, die die erste Achse und die zweite Achse schneidet, null sind, und
Vergleichen (S223) der Beschleunigung in der Richtung der zweiten Achse, die in dem Beschleunigungssignal enthalten ist, mit der zentripentalen Beschleunigung in der Richtung der zweiten Achse, und Durchführen der Fehlerdiagnose des ersten Sensorelements basierend darauf, ob ein Vergleichsergebnis einen zweiten Standard erfüllt.

6. Verfahren zur Fehlerdiagnose in einem Sensormodul nach Anspruch 1, wobei

der zweite Diagnoseschritt enthält
Erfassen (S321) einer Position in einer Richtung der dritten Achse, die die erste Achse und die zweite Achse schneidet, mit einem Drehungsmittelpunkt einer Drehbewegung um die erste Achse, die von dem Sensormodul durchgeführt wird, als einen Ursprung,
Berechnen (S322), unter Verwendung der ersten Winkelgeschwindigkeit oder der zweiten Winkelgeschwindigkeit und der Position in der Richtung der dritten Achse, einer Euler-Beschleunigung in der Richtung der zweiten Achse, wenn eine Winkelgeschwindigkeit um die zweite Achse und eine Winkelgeschwindigkeit um die dritte Achse null sind, und
Vergleichen (S323) der Beschleunigung in der Richtung der zweiten Achse, die in dem Beschleunigungssignal enthalten ist, mit der Euler-Beschleunigung in der Richtung der zweiten Achse, und Durchführen der Fehlerdiagnose des ersten Sensorelements basierend darauf, ob ein Vergleichsergebnis einen zweiten Standard erfüllt.

7. Verfahren zur Fehlerdiagnose in einem Sensormodul nach Anspruch 1, wobei

der zweite Diagnoseschritt enthält
Erfassen (S421) einer Position in einer Richtung der dritten Achse, die die erste Achse und die zweite Achse schneidet, mit einem Drehungsmittelpunkt einer Drehbewegung um die erste Achse, die von dem Sensormodul durchgeführt wird, als einen Ursprung,
Berechnen (S422), unter Verwendung der ersten Winkelgeschwindigkeit oder der zweiten Winkelgeschwindigkeit und der Position in der Richtung der dritten Achse, einer Coriolis-Beschleunigung in der Richtung der zweiten Achse, wenn eine Winkelgeschwindigkeit um die zweite Achse und eine Winkelgeschwindigkeit um die dritte Achse null sind, und
Vergleichen (S423) der Beschleunigung in der Richtung der zweiten Achse, die in dem Beschleunigungssignal enthalten ist, mit der Coriolis-Beschleunigung in der Richtung der zweiten Achse und Durchführen der Fehlerdiagnose des ersten Sensorelements basierend darauf, ob ein Vergleichsergebnis einen zweiten Standard erfüllt.

8. Sensormodul (1), umfassend:

ein erstes Sensorelement (11), das eingerichtet ist, eine Winkelgeschwindigkeit um eine erste Achse zu detektieren und ein erstes Detektionssignal auszugeben;
ein zweites Sensorelement (12), das eingerichtet ist, eine Winkelgeschwindigkeit um die erste Achse zu detektieren und ein zweites Detektionssignal auszugeben;
ein drittes Sensorelement (S13), das eingerichtet ist, eine Beschleunigung in einer Richtung der zweiten Achse zu detektieren, die die erste Achse schneidet, und ein drittes Detektionssignal auszugeben; und
eine Fehlerdiagnoseschaltung (2), wobei
die Fehlerdiagnoseschaltung

eine erste Winkelgeschwindigkeit mit einer zweiten Winkelgeschwindigkeit vergleicht und diagnostiziert, dass das erste Sensorelement und das zweite Sensorelement normal sind, wenn ein Vergleichsergebnis einen ersten Standard erfüllt, wobei die erste Winkelgeschwindigkeit die Winkelgeschwindigkeit um die erste Achse, die in einem ersten Winkelgeschwindigkeitssignal enthalten ist, basierend auf dem ersten Detektionssignal ist, die zweite Winkelgeschwindigkeit die Winkelgeschwindigkeit um die erste Achse, die in einem zweiten Winkelgeschwindigkeitssignal enthalten ist, basierend auf dem zweiten Detektionssignal ist, und **dadurch gekennzeichnet, dass** die Fehlerdiagnoseschaltung eine Fehlerdiagnose des ersten Sensorelements unter Verwendung des ersten Winkelgeschwindigkeitssignals oder des zweiten Winkelgeschwindigkeitssignals und eines Beschleunigungssignals basierend auf dem dritten Detektionssignal durchführt, wenn das Vergleichsergebnis den ersten Standard nicht erfüllt.

**Revendications**

1. Procédé de diagnostic de défaillance dans un module de capteur (1) incluant un premier élément de capteur (11) configuré pour détecter une vélocité angulaire autour d'un premier axe et pour émettre un premier signal de détection, un deuxième élément de capteur (12) configuré pour détecter une vélocité angulaire autour du premier axe et pour émettre un deuxième signal de détection, et un troisième élément de capteur (13) configuré pour détecter une accélération dans une direction de deuxième axe coupant le premier axe et pour émettre un troisième signal de détection, le procédé comprenant :

    une première étape de diagnostic consistant à comparer (S11) une première vélocité angulaire avec une deuxième vélocité angulaire et à diagnostiquer que le premier élément de capteur et le deuxième élément de capteur sont normaux lorsqu'un résultat de comparaison satisfait (S12) un premier niveau, la première vélocité angulaire étant la vélocité angulaire autour du premier axe incluse dans un premier signal de vélocité angulaire basé sur le premier signal de détection, la deuxième vélocité angulaire étant la vélocité angulaire autour du premier axe incluse dans un deuxième signal de vélocité angulaire basé sur le deuxième surface signal de détection ; **caractérisé en ce que** le procédé comprend en outre
    une deuxième étape de diagnostic consistant à exécuter (S20) un diagnostic de défaillance du premier élément de capteur à l'aide du premier signal de vélocité angulaire ou du deuxième signal de vélocité angulaire et d'un signal d'accélération basé sur le troisième signal de détection lorsque le résultat de comparaison ne satisfait pas le premier niveau.

2. Procédé de diagnostic d'une défaillance dans un module de capteur selon la revendication 1, dans lequel le premier élément de capteur présente une précision de détection plus élevée que celle du deuxième élément de capteur.

3. Procédé de diagnostic d'une défaillance dans un module de capteur selon la revendication 1, dans lequel

    la deuxième étape de diagnostic inclut
    le calcul (S21) d'un rapport de l'accélération dans la direction de deuxième axe incluse dans le signal d'accélération à la première vélocité angulaire ou à la deuxième vélocité angulaire, et
    l'exécution (S22) du diagnostic de défaillance du premier élément de capteur selon si le rapport satisfait un deuxième niveau.

4. Procédé de diagnostic d'une défaillance dans un module de capteur selon la revendication 1, dans lequel

    la deuxième étape de diagnostic inclut l'acquisition (S121) d'une vitesse dans une direction de troisième axe coupant le premier axe et le deuxième axe,
    le calcul (S122), à l'aide de la première vélocité angulaire ou de la deuxième vélocité angulaire et de la vitesse dans la direction de troisième axe, d'une accélération centripète dans la direction de deuxième axe lorsqu'une vélocité angulaire autour du deuxième axe et une vélocité angulaire autour du troisième axe sont nulles, et
    la comparaison (S123) de l'accélération dans la direction de deuxième axe incluse dans le signal d'accélération avec l'accélération centripète dans la direction de deuxième axe et l'exécution du diagnostic de défaillance du premier élément de capteur selon si un résultat de comparaison satisfait un deuxième niveau.

5. Procédé de diagnostic d'une défaillance dans un module de capteur selon la revendication 1, dans lequel

la deuxième étape de diagnostic inclut l'acquisition (S221) d'une position dans la direction de deuxième axe avec un centre de rotation d'un mouvement de rotation autour du premier axe effectué par le module de capteur comme origine,

le calcul (S222), à l'aide de la première vélocité angulaire ou de la deuxième vélocité angulaire et de la position dans la direction de deuxième axe, d'une accélération centripète dans la direction de deuxième axe lorsqu'une vélocité angulaire autour du deuxième axe et une vélocité angulaire autour du troisième axe coupant le premier axe et le deuxième axe sont nulles, et

la comparaison (S223) de l'accélération dans la direction de deuxième axe dans le signal de détection avec l'accélération centripète dans la direction de deuxième axe, et l'exécution du diagnostic de défaillance du premier élément de capteur selon si un résultat de comparaison satisfait un deuxième niveau.

6. Procédé de diagnostic d'une défaillance dans un module de capteur selon la revendication 1, dans lequel

la deuxième étape de diagnostic inclut l'acquisition (S321) d'une position dans une direction de troisième axe coupant le premier axe et le deuxième axe avec un centre de rotation d'un mouvement de rotation autour du premier axe effectué par le module de capteur comme origine,

le calcul (S322), à l'aide de la première vélocité angulaire ou de la deuxième vélocité angulaire et de la position dans la direction de troisième axe, d'une accélération d'Euler dans la direction de deuxième axe lorsqu'une vélocité angulaire autour du deuxième axe et une vélocité angulaire autour du troisième axe sont nulles, et

la comparaison (S323) de l'accélération dans la direction de deuxième axe incluse dans le signal d'accélération avec l'accélération d'Euler dans la direction de deuxième axe, et l'exécution du diagnostic de défaillance du premier élément de capteur selon si un résultat de comparaison satisfait un deuxième niveau.

7. Procédé de diagnostic d'une défaillance dans un module de capteur selon la revendication 1, dans lequel

la deuxième étape de diagnostic inclut l'acquisition (S421) d'une position dans une direction de troisième axe coupant le premier axe et le deuxième axe avec un centre de rotation d'un mouvement de rotation autour du premier axe effectué par le module de capteur comme origine,

le calcul (S422), à l'aide de la première vélocité angulaire ou de la deuxième vélocité angulaire et de la position dans la direction de troisième axe, d'une accélération de Coriolis dans la direction de deuxième axe lorsqu'une vélocité angulaire autour du deuxième axe et une vélocité angulaire autour du troisième axe sont nulles, et

la comparaison (S423) de l'accélération dans la direction de deuxième axe incluse dans le signal d'accélération avec l'accélération de Coriolis dans la direction de deuxième axe, et l'exécution du diagnostic de défaillance du premier élément de capteur selon si un résultat de comparaison satisfait un deuxième niveau.

8. Module de capteur (1) comprenant :

un premier élément de capteur (11) configuré pour détecter une vélocité angulaire autour d'un premier axe et pour émettre un premier signal de détection ;

un deuxième élément de capteur (12) configuré pour détecter une vélocité angulaire autour du premier axe et pour émettre un deuxième signal de détection ;

un troisième élément de capteur (S13) configuré pour détecter une accélération dans une direction de deuxième axe coupant le premier axe et pour émettre un troisième signal de détection ; et

un circuit de diagnostic de défaillance (2), dans lequel

le circuit de diagnostic de défaillance

compare une première vélocité angulaire avec une deuxième vélocité angulaire et diagnostique que le premier élément de capteur et le deuxième élément de capteur sont normaux lorsqu'un résultat de comparaison satisfait un premier niveau, la première vélocité angulaire étant la vélocité angulaire autour du premier axe incluse dans un premier signal de vélocité angulaire basé sur le premier signal de détection, la deuxième vélocité angulaire étant la vélocité angulaire autour du premier axe incluse dans un deuxième signal de vélocité angulaire basé sur le deuxième surface signal de détection, et

**caractérisé en ce que** le circuit de diagnostic de défaillance exécute un diagnostic de défaillance du premier élément de capteur à l'aide du premier signal de vélocité angulaire ou du deuxième signal de vélocité angulaire et d'un signal d'accélération basé sur le troisième signal de détection lorsque le résultat de comparaison ne satisfait pas le premier niveau.

# FIG. 1

1 SENSOR MODULE

# FIG. 2

# FIG. 3

START

S21

CALCULATE RATIO OF ACCELERATION IN SECOND-AXIS DIRECTION INCLUDED IN ACCELERATION SIGNAL BASED ON THIRD DETECTION SIGNAL TO FIRST ANGULAR VELOCITY OR SECOND ANGULAR VELOCITY

S22

PERFORM FAILURE DIAGNOSIS OF FIRST SENSOR ELEMENT BASED ON WHETHER RATIO OF ACCELE-RATION TO FIRST ANGULAR VELOCITY OR SECOND ANGULAR VELOCITY SATISFIES SECOND STANDARD

END

# FIG. 4

EP 4 431 872 B1

## FIG. 5

## FIG. 6

## FIG. 7

## FIG. 8

## FIG. 9

## FIG. 10

## FIG. 11

## FIG. 12

## FIG. 13

## FIG. 14

## FIG. 15

START

↓

S121

ACQUIRE SPEED IN DIRECTION OF THIRD AXIS
INTERSECTING FIRST AXIS AND SECOND AXIS

↓

S122

CALCULATE CENTRIPETAL ACCELERATION IN
SECOND-AXIS DIRECTION WHEN ANGULAR
VELOCITY AROUND SECOND AXIS AND
ANGULAR VELOCITY AROUND THIRD AXIS ARE
ZERO USING FIRST ANGULAR VELOCITY OR
SECOND ANGULAR VELOCITY AND SPEED
IN THIRD-AXIS DIRECTION

↓

S123

COMPARE ACCELERATION IN SECOND-AXIS
DIRECTION INCLUDED IN ACCELERATION
SIGNAL BASED ON THIRD DETECTION SIGNAL
WITH CENTRIPETAL ACCELERATION IN
SECOND-AXIS DIRECTION, AND PERFORM
FAILURE DIAGNOSIS OF FIRST SENSOR
ELEMENT BASED ON WHETHER COMPARISON
RESULT SATISFIES SECOND STANDARD

↓

END

## FIG. 16

# FIG. 17

```
           START
             │
             ▼                        ⌐S221
┌────────────────────────────────┐
│  ACQUIRE POSITION IN SECOND-AXIS │
│  DIRECTION WITH ROTATION CENTER OF│
│  ROTATIONAL MOTION AROUND FIRST AXIS│
│  PERFORMED BY SENSOR MODULE AS ORIGIN│
└────────────────────────────────┘
             │
             ▼                        ⌐S222
┌────────────────────────────────┐
│  CALCULATE CENTRIPETAL ACCELERATION IN│
│  SECOND-AXIS DIRECTION WHEN ANGULAR│
│  VELOCITY AROUND SECOND AXIS AND│
│  ANGULAR VELOCITY AROUND THIRD AXIS│
│  INTERSECTING FIRST AXIS AND SECOND AXIS│
│  ARE ZERO USING FIRST ANGULAR VELOCITY│
│  OR SECOND ANGULAR VELOCITY AND│
│  POSITION IN SECOND-AXIS DIRECTION│
└────────────────────────────────┘
             │
             ▼                        ⌐S223
┌────────────────────────────────┐
│  COMPARE ACCELERATION IN SECOND-AXIS│
│  DIRECTION INCLUDED IN ACCELERATION│
│  SIGNAL BASED ON THIRD DETECTION SIGNAL│
│  WITH CENTRIPETAL ACCELERATION IN│
│  SECOND-AXIS DIRECTION, AND PERFORM│
│  FAILURE DIAGNOSIS OF FIRST SENSOR│
│  ELEMENT BASED ON WHETHER COMPARISON│
│  RESULT SATISFIES SECOND STANDARD│
└────────────────────────────────┘
             │
             ▼
            END
```

# FIG. 18

$-r_y\Omega_z{}^2\ (m/s^2)$

$A_y\ (m/s^2)$

## FIG. 19

START

S321

ACQUIRE POSITION IN DIRECTION OF THIRD AXIS INTERSECTING FIRST AXIS AND SECOND AXIS WITH ROTATION CENTER OF ROTATIONAL MOTION AROUND FIRST AXIS PERFORMED BY SENSOR MODULE AS ORIGIN

S322

CALCULATE EULER ACCELERATION IN SECOND-AXIS DIRECTION WHEN ANGULAR VELOCITY AROUND SECOND AXIS AND ANGULAR VELOCITY AROUND THIRD AXIS ARE ZERO USING FIRST ANGULAR VELOCITY OR SECOND ANGULAR VELOCITY AND POSITION IN THIRD-AXIS DIRECTION

S323

COMPARE ACCELERATION IN SECOND-AXIS DIRECTION INCLUDED IN ACCELERATION SIGNAL BASED ON THIRD DETECTION SIGNAL WITH EULER ACCELERATION IN SECOND-AXIS DIRECTION, AND PERFORM FAILURE DIAGNOSIS OF FIRST SENSOR ELEMENT BASED ON WHETHER COMPARISON RESULT SATISFIES SECOND STANDARD

END

## FIG. 20

START

S421

ACQUIRE POSITION IN DIRECTION OF THIRD AXIS INTERSECTING FIRST AXIS AND SECOND AXIS WITH ROTATION CENTER OF ROTATIONAL MOTION AROUND FIRST AXIS PERFORMED BY SENSOR MODULE AS ORIGIN

S422

CALCULATE CORIOLIS ACCELERATION IN SECOND-AXIS DIRECTION WHEN ANGULAR VELOCITY AROUND SECOND AXIS AND ANGULAR VELOCITY AROUND THIRD AXIS ARE ZERO USING FIRST ANGULAR VELOCITY OR SECOND ANGULAR VELOCITY AND POSITION IN THIRD-AXIS DIRECTION

S423

COMPARE ACCELERATION IN SECOND-AXIS DIRECTION INCLUDED IN ACCELERATION SIGNAL BASED ON THIRD DETECTION SIGNAL WITH CORIOLIS ACCELERATION IN SECOND-AXIS DIRECTION, AND PERFORM FAILURE DIAGNOSIS OF FIRST SENSOR ELEMENT BASED ON WHETHER COMPARISON RESULT SATISFIES SECOND STANDARD

END

## FIG. 21

200 SENSOR MODULE

**FIG. 22**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023040755 A
- JP 2008247053 A
- US 2022204002 A1
- US 2020371131 A1